# EUROPEAN PATENT SPECIFICATION

(11) **EP 4 561 124 B1**
(45) Date of publication and mention of the grant of the patent: **07.10.2026**
(21) Application number: 23845148.8
(22) Date of filing: 20.06.2023
(51) Int. Cl.: H04W 4/70, H04W 48/16, H04W 76/12, H04W 76/22, H04W 24/10, H04W 8/20, H04W 88/14, H04W 4/80

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 27.07.2022 CN 202210892367
(43) Date of publication of application: 28.05.2025
(73) Proprietor: Huawei Technologies Co., Ltd., Shenzhen, Guangdong 518129 (CN)
(72) Inventor: ZHOU, Xiaoyun, Shenzhen, Guangdong 518129 (CN); ZONG, Zaifeng, Shenzhen, Guangdong 518129 (CN); ZHENG, Xiaochun, Shenzhen, Guangdong 518129 (CN); LIAO, Ting, Shenzhen, Guangdong 518129 (CN)
(74) Representative: Pfenning, Meinig & Partner mbB
(86) International application number: PCT/CN2023/101262
(87) International publication number: WO 2024/021935

(56) References cited:
- EP-A1- 4 258 604
- WO-A1-2022/110184
- WO-A1-2022/142465
- CN-A- 102 646 203
- CN-A- 109 446 864
- CN-A- 110 087 321

## Description

### TECHNICAL FIELD

This application relates to the field of communication technologies, and in particular, to a communication method and apparatus.

### BACKGROUND

A passive radio frequency identification (radio frequency identification, RFID) system includes a reader/writer and a tag (tag). The reader/writer reads information from the tag, or writes information to be stored in the tag into the tag. The reader/writer and the tag perform non-contact data communication with each other. The tag has a simple function, and relies on excitation of the reader/writer to send information. To be specific, the tag converts a radio signal sent by the reader/writer into energy, and uses the energy to drive the tag to operate.

With the development of communication, it is proposed to introduce an RFID technology in communication networks to realize passive or semi-passive internet of things (internet of things, IoT). To be specific, an access network device may integrate capabilities of the reader/writer, and send a radio signal to an RFID-capable terminal device (for example, a passive, semi-passive, or semi-active terminal device); and the terminal device uses energy converted from the radio signal to drive the terminal device to operate. When being in an operating state, the terminal device may send, under control of a control plane network element, an execution result corresponding to an operation such as a read/write operation. When the execution result is not transmitted through the control plane network element, the control plane network element does not know whether the terminal device has performed the operation. Consequently, the control plane network element cannot manage a plurality of terminal devices.

WO 2022/142465 A1 relates to a charging method, apparatus and system. The method comprises: according to identification information of a terminal on which a first operation is performed and type information of the first operation, a first network element or an access network device determines quantity information of the terminal on which the first operation is performed, and the first network element sends to a charging function network element charging information comprising the type information and the quantity information. The first network element can support a charging trigger function by itself and send the charging information to the charging function network element, and can also send the charging information to the charging function network element by means of a session management function network element or access and mobility management function network element supporting the charging trigger function. By means of the method, the charging information can reasonably reflect a resource occupied by the first operation, and a charging process is that charging is performed according to the charging information, so that the charging process matches the first operation, and a charging behavior is reasonable.

### SUMMARY

The invention is defined by the appended claims.

According to a first aspect, an embodiment of this application provides a communication method. The method may be performed by a terminal management function network element or a module (for example, a chip) in a terminal management function network element. An example in which the terminal management function network element performs the method is used for description. First, a first request for performing a target operation on a target terminal is received, where the target terminal includes a plurality of terminals, and the target operation includes one or more operations. Then, first information is sent to an access network device, where the first information indicates to query for the target terminal. Then, at least one piece of indication information is sent to a first terminal found through querying by the access network device, where the indication information indicates at least one operation in the target operation, the first terminal belongs to the target terminal, and an execution result of performing, by the first terminal, an operation indicated by any one of the indication information is sent by the first terminal to a user plane network element. Next, when it is determined that at least one piece of second information from the user plane network element is received, third information is sent to the access network device, where the third information indicates to query for another terminal that is not found through querying in the target terminal, and the second information indicates that the user plane network element receives, from the first terminal, the execution result of performing the operation indicated by any one of the indication information.

In this application, the terminal management function network element queries for the target terminal within coverage of the access network device via the access network device. The terminal management function network element can perform the target operation on the target terminal found through querying. After a terminal found through querying performs the target operation, the terminal management function network element reports the execution result to the user plane network element. The user plane network element may notify the terminal management function network element that the execution result of the terminal is received, so that the terminal management function network element controls the access network device to query for a next terminal. Management of a plurality of target terminals is implemented in this process.

In a possible implementation, the second information includes an identifier of the first terminal.

The identifier of the first terminal is carried in the second information, to indicate that the execution result received by the user plane network element is an execution result of the first terminal.

In a possible implementation, the second information corresponding to the indication information further includes information about the operation indicated by the indication information; and before the sending third information to the access network device, the terminal management function network element may further determine that an operation corresponding to the information about the operation that is included in the at least one piece of second information is the same as a target operation corresponding to the first terminal.

The information about the operation is carried in the second information, so that the terminal management function network element can more accurately determine, based on the information about the operation carried in the second information, whether the first terminal has completed the target operation.

In a possible implementation, the at least one piece of indication information includes first indication information and second indication information; the terminal management function network element may first send the first indication information to the first terminal; and when second information corresponding to the first indication information is received, and it is determined, based on a mapping relationship between the identifier of the first terminal and a performed operation, that the first terminal has not completed the target operation, the second indication information is sent to the first terminal. Next, when second information corresponding to the second indication information is received, and it is determined, based on the mapping relationship between the identifier of the first terminal and the performed operation, that the first terminal has completed the target operation, the third information is sent to the access network device.

In a possible implementation, the terminal management function network element sends a policy rule to the user plane network element, where the second information is sent by the user plane network element according to the policy rule, and the policy rule indicates the user plane network element to send the second information after receiving an execution result of performing any operation in the target operation by any terminal in the target terminal.

The terminal management function network element configures the policy rule for the user plane network element, so that the user plane network element sends the second information to the terminal management function network element after receiving the execution result.

In a possible implementation, the terminal management function network element may receive a second request from a session management network element, where the second request is for requesting to establish an association between the session management network element and the terminal management function network element for the first request; and establish the association between the terminal management function network element and the session management network element for the first request. Then, the terminal management function network element indicates the policy rule to the user plane network element via the session management network element based on the association.

The policy rule formulated for the first request is sent over the established association, so that an identifier identifying the first request does not need to be carried. In this way, resources can be saved.

In a possible implementation, the terminal management function network element may receive the second request from the session management network element, where the second request is for requesting to establish the association between the session management network element and the terminal management function network element for the first request; and establish the association between the terminal management function network element and the session management network element for the first request. Then, the terminal management function network element receives the second information from the user plane network element via the session management network element based on the association.

The second information triggered for the first request is sent over the established association, so that an identifier identifying the first request does not need to be carried. In this way, resources can be saved.

In a possible implementation, the first information includes a first identifier, the first identifier identifies the first request, and the first identifier is generated by the terminal management function network element for the first request, or the first request includes the first identifier; the second request includes the first identifier, where in a process of establishing a user plane tunnel between the access network device and the user plane network element, the access network device sends the first identifier to the session management network element, and the user plane tunnel between the access network device and the user plane network element is for transmission of the execution result of performing any operation in the target operation by any terminal in the target terminal; and the terminal management function network element may establish the association between the terminal management function network element and the session management network element for the first identifier.

In a possible implementation, the first information includes the first identifier, the first identifier identifies the first request, and the first identifier is generated by the terminal management function network element for the first request, or the first request includes the first identifier; after sending the first information to the access network device, the terminal management function network element may first receive fourth information from the access network device, where the fourth information includes the identifier of the first terminal and the first identifier; and determine, based on the first identifier, that the fourth information is related to the first request; and then send at least one piece of indication information to the first terminal found through querying by the access network device.

The first identifier is carried in the fourth information, so that the terminal management function network element can associate the fourth information with the first request.

In a possible implementation, the target operation includes one or more of the following: a stocktaking operation, a read operation, a write operation, a deletion operation, an encryption operation, an access operation, a block write operation, a block erase operation, or a kill operation.

In a possible implementation, any terminal in the target terminal is a passive terminal, a semi-passive terminal, or a semi-active terminal.

According to a second aspect, an embodiment of this application provides a communication method. The method may be performed by a user plane network element or a module (for example, a chip) in a user plane network element. An example in which the user plane network element performs the method is used for description. The user plane network element receives an execution result, where the execution result is a result of performing at least one operation by a first terminal, the execution result includes an identifier of the first terminal, and the at least one operation is indicated by a terminal management function network element to the first terminal. Then, the user plane network element sends second information to the terminal management function network element, where the second information indicates that the user plane network element receives the execution result, from the first terminal, of performing the at least one operation.

In a possible implementation, the execution result further includes one or more of the following: information about the at least one operation, or data generated by performing the at least one operation by the first terminal.

In a possible implementation, the user plane network element receives the execution result based on a user plane tunnel between an access network device and the user plane network element, where terminals within coverage of the access network device correspond to a same user plane tunnel; or the user plane network element receives the execution result based on a user plane tunnel that is between an access network device and the user plane network element and that is established for the first terminal, where different terminals within coverage of the access network device correspond to different user plane tunnels.

In a possible implementation, the second information includes the identifier of the first terminal.

In a possible implementation, the second information further includes the information about the at least one operation.

In a possible implementation, the user plane network element may send the second information to the terminal management function network element according to a policy rule, where the policy rule indicates the user plane network element to send the second information after receiving an execution result of performing an operation by a terminal.

In a possible implementation, the user plane network element may receive the policy rule from the terminal management function network element.

According to a third aspect, a communication apparatus is provided. The communication apparatus comprises a module that implements the method according to any one of claims 1 to 6, or the method according to any one of claims 7 to 12.

According to a fourth aspect, this application provides a chip system. The chip system includes one or more processors (which may also be referred to as processing circuits). The processor is electrically coupled to a memory (which may also be referred to as a storage medium). The memory may be located in the chip system, or may not be located in the chip system. The memory is configured to store computer programs or instructions. The processor is configured to: execute some or all of the computer programs or instructions in the memory; and when the some or all of the computer programs or instructions are executed, implement the method according to any one of the foregoing aspects, in particular the method according to claims 1 to 6, or the method according to any one of claims 7 to 12.

In a possible implementation, the chip system may further include an input/output interface (which may also be referred to as a communication interface). The input/output interface is configured to: output a signal processed by the processor, or receive a signal input into the processor. The input/output interface may perform a sending action or a receiving action in any one of the aspects and the possible implementations of the aspects. Specifically, the output interface performs the sending action, and the input interface performs the receiving action.

In a possible implementation, the chip system may include a chip, or may include a chip and another discrete component.

According to a fifth aspect, a computer-readable storage medium is provided, and is configured to store a computer program. The computer program includes instructions for implementing a function in any one of the aspects, in particular for implementing the method according to any one of claims 1 to 6, or the method according to any one of claims 7 to 12. BRIEF DESCRIPTION OF DRAWINGS
FIG. 1 is a diagram of an architecture of a communication system not covered by the appended claims;
FIG. 2 is a diagram of an architecture of a communication system to which embodiments of this application are applicable;
FIG. 3 is a diagram of an architecture of a communication system to which embodiments of this application are applicable;
FIG. 4 is a diagram of an architecture of a communication system to which embodiments of this application are applicable;
FIG. 5 is a diagram of an architecture of a communication system to which embodiments of this application are applicable;
FIG. 6 is a schematic flowchart of communication according to an embodiment of this application;
FIG. 7A and FIG. 7B are a schematic flowchart of communication according to an embodiment of this application;
FIG. 8A and FIG. 8B are a schematic flowchart of communication according to an embodiment of this application;
FIG. 9A and FIG. 9B are a schematic flowchart of communication according to an embodiment of this application;
FIG. 10 is a diagram of a structure of a communication apparatus according to an embodiment of this application; and
FIG. 11 is a diagram of a structure of a communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.
(1) Inventory operation: The inventory operation may also be referred to as a stocktaking operation. The operation may be performed to obtain identification information of an electronic tag, for example, obtain the identification information of the electronic tag using a command such as a query (query) command or an acknowledgment (ack) command.
(2) Read (Read) operation: The read operation may be reading electronic product code (electronic product code, EPC), a tag identifier (tag identifier, TID), content stored in a reserved bank, content stored in a user memory bank, or the like in a memory bank of the electronic tag.
(3) Write (Write) operation: The write operation may be performed on the EPC, the TID, the reserved bank, or the user memory bank in the memory bank of the electronic tag.
(4) Kill (Kill) operation: The kill operation can make the electronic tag unable to work forever.
(5) Lock (Lock) operation: The lock operation can lock information about the electronic tag, to prevent read and write operations on the electronic tag. Alternatively, the lock operation can lock memory banks (memory banks), to prevent or allow read and write operations on the memory bank.
(6) Block write operation: The block write operation may enable a reader/writer to perform a multi-byte write operation on the reserved bank, the EPC, the TID, or the user bank in the memory bank of the tag by using a single command.
(7) Block erase operation: The block erase operation may enable the reader/writer to perform a multi-byte erase operation on the reserved bank, the EPC, the TID, or the user bank in the memory bank of the tag.
(8) Access operation: The access operation enables a tag with a non-zero-value access password (access password) to change from an open (open) state to a secured (secured) state.

In embodiments of this application, "at least one" means one or more, and "a plurality of" means two or more than two. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

In addition, unless otherwise stated, ordinal numbers such as "first" and "second" in embodiments of this application are used to distinguish between a plurality of objects, but are not intended to limit sizes, content, an order, a time sequence, priorities, importance, or the like of the plurality of objects. For example, a first message and a second message are merely intended to distinguish between different messages, but do not indicate that the two messages are different in content, priorities, or importance degrees.

The communication method provided in this application may be applied to various communication systems, for example, an internet of things (internet of things, IoT), a narrow band internet of things (narrow band internet of things, NB-IoT), long term evolution (long term evolution, LTE), a 5th generation (5th generation, 5G) communication system, an LTE and 5G hybrid architecture, a 6G communication system, or a new communication system that appears in future communication development. Alternatively, the communication system may be a machine to machine (machine to machine, M2M) network, a machine type communication (machine type communication, MTC) network, or another network. The communication system may alternatively be a passive internet of things communication system. For example, the communication method provided in embodiments of this application may be applied to a communication system including a reader/writer and a tag.

The following uses an example in which the technical solutions in embodiments of this application are applied to a 5G communication system for description.

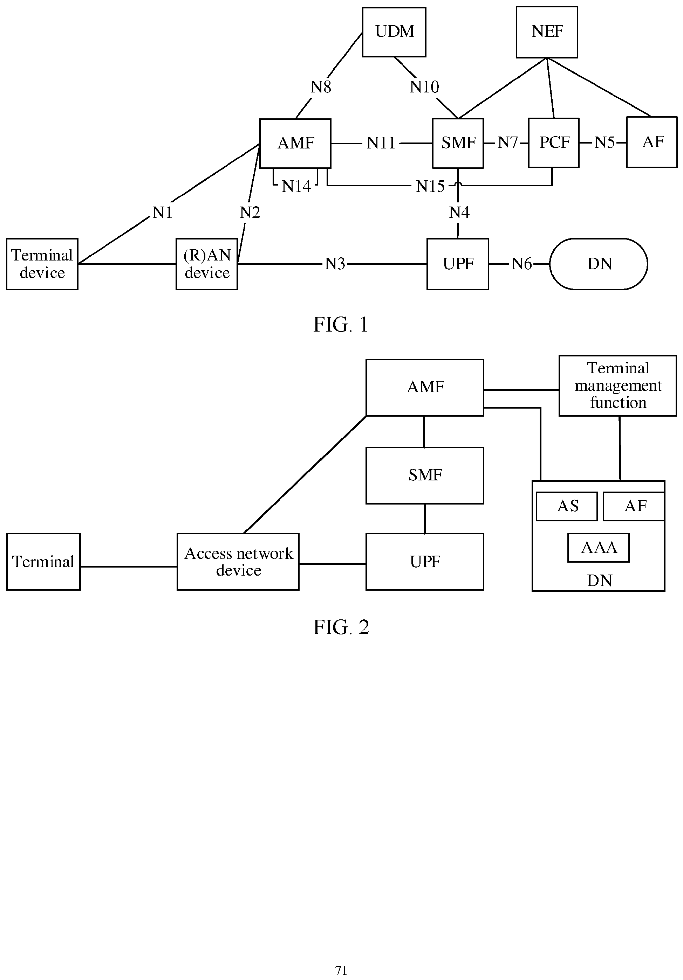

FIG. 1 is a diagram of an architecture of a 3rd generation partnership project (3rd Generation Partnership Project, 3GPP) system in 5G, including a terminal device, an access network device, and a core network element. Optionally, a data network (data network, DN) part and an application function (application function, AF) network element part are further included. The terminal accesses a core network through an access network, and the core network communicates with the DN or the AF. The following briefly describes functions of some network elements in the architecture.

The terminal device may also be referred to as a terminal. The terminal device in embodiments of this application may be a passive terminal device or a semi-passive terminal device. The terminal device in embodiments of this application may also be referred to as a passive (passive) terminal device. The terminal device in embodiments of this application may be, for example, a tag or user equipment (user equipment, UE). The terminal may be widely used in various scenarios, for example, internet of things (internet of things, IOT), device-to-device (device-to-device, D2D), vehicle to everything (vehicle to everything, V2X) communication, machine-type communication (machine-type communication, MTC), internet of things (internet of things, IOT), virtual reality, augmented reality, industrial control, self-driving, telemedicine, smart grid, smart furniture, smart office, smart wearables, smart transportation, and smart city. A specific technology and a specific device form that are used by the terminal are not limited in embodiments of this application. To describe the solutions in embodiments of this application more clearly, in some embodiments of this application, an example in which the terminal device is a tag is used for description.

In embodiments of this application, an apparatus configured to implement a function of the passive terminal may be a terminal device, or may be an apparatus, for example, a chip system, that can support the terminal device in implementing the function. The apparatus may be installed in the terminal device. In this embodiment of this application, the chip system may include a chip, or may include a chip and another discrete component. The technical solutions provided in embodiments of this application are described by using an example in which the apparatus configured to implement the function of the electronic tag is the terminal device.

The access network device is configured to connect the terminal device to a wireless network. The access network device may be a base station (base station), an evolved NodeB (evolved NodeB, eNodeB) in an LTE system or an LTE-Advanced system (LTE-Advanced, LTE-A), a next generation NodeB (next generation NodeB, gNB) in a 5G communication system, a transmission reception point (transmission reception point, TRP), a baseband unit (baseband unit, BBU), a Wi-Fi access point (access point, AP), a base station in a future mobile communication system, an access node in a Wi-Fi system, or the like. The access network device may alternatively be a module or a unit that implements some functions of a base station, for example, may be a central unit (central unit, CU) or a distributed unit (distributed unit, DU). A specific technology and a specific device form that are used by the access network device are not limited in embodiments of this application. For example, in a network structure, the access network device may be a CU node, a DU node, or an access network device including the CU node and the DU node. Specifically, the CU node is configured to support protocols such as radio resource control (radio resource control, RRC), a packet data convergence protocol (packet data convergence protocol, PDCP), and a service data adaptation protocol (service data adaptation protocol, SDAP). The DU node is configured to support a radio link control (radio link control, RLC) layer protocol, a medium access control (medium access control, MAC) layer protocol, and a physical layer protocol. The access network device may further include a read/write device such as a reader/writer and a reader, and an excitation device or an auxiliary device that can send only a downlink excitation signal or data to the electronic tag.

The data network (DN) is a network located outside an operator network. The DN operator network may access a plurality of DNs, and a plurality of services may be deployed on the DN, to provide services such as data and/or a voice for the terminal device. For example, the DN is a private network of a smart factory, a sensor installed in a workshop of the smart factory may be a terminal device, a control server and the sensor are deployed in the DN, and the control server may serve the sensor. The sensor may communicate with the control server to obtain instructions of the control server, transmit collected sensor data to the control server based on the instructions, and the like. For another example, the DN is an internal office network of a company, a mobile phone or a computer of an employee of the company may be a terminal device, and the mobile phone or the computer of the employee may access information, data resources, and the like on the internal office network of the company.

An application network element mainly supports interaction with a 3rd generation partnership project (3rd generation partnership project, 3GPP) core network to provide services, for example, affecting a data routing decision, a policy control function, or providing some third-party services for a network side. In the 5G communication system, the application network element may be an application function (application function, AF) network element. In a future communication system, the application network element may still be an AF network element, or may have another name. This is not limited in this application.

It should be understood that the application network element in embodiments of this application may also be referred to as a back-end application system, and may be provided by a third party (to be specific, a third party other than the operator and the user). The AF network element in the 5G communication system may be used as an interface for the application network element to access the core network. However, in an actual application, the application network element may be provided by a network operator, or may be provided by a third party. In a possible implementation, an authentication server and an application function network element in embodiments of this application may be deployed in a DN.

The core network part may include one or more of the following network elements.

An access management network element (which may also be referred to as a mobility management network element) is a control plane network element provided by an operator network, and is responsible for access control and mobility management for accessing the operator network by the terminal device, for example, including mobility status management, temporary mobile subscriber identity allocation, user authentication, and other function. In a 5G communication system, the access management network element may be an access and mobility management function (access and mobility management function, AMF) network element. In the future communication system, the access management network element may still be an AMF network element, or may have another name. This is not limited in this application.

A session management network element is mainly responsible for session management in a mobile network, for example, session establishment, modification, and release. Specific functions are, for example, assigning an IP address to the user, and selecting a user plane network element that provides a packet forwarding function. In the 5G communication system, the session management network element may be a session management function (session management function, SMF) network element. In the future communication system, the session management network element may still be an SMF network element, or may have another name. This is not limited in this application.

A user plane network element is responsible for forwarding and reception of user data in the terminal device. The user plane network element may receive user data from the data network, and transmit the user data to the terminal device through the access network device. In addition, the user plane network element may receive user data from the terminal device through the access network device, and forward the user data to the data network. A transmission resource and a scheduling function in the user plane network element that provide a service for the terminal device are managed and controlled by the SMF network element. In the 5G communication system, the user plane network element may be a user plane function (user plane function, UPF) network element. In the future communication system, the user plane network element may still be a UPF network element, or may have another name. This is not limited in this application.

A data management network element is configured to: generate an authentication credential, process a subscriber identifier (for example, store and manage a subscription permanent identifier), control access, manage subscription data, and the like. In the 5G communication system, the data management network element may be a unified data management (unified data management, UDM) network element. In the future communication system, the unified data management may still be a UDM network element, or may have another name. This is not limited in this application.

A policy control network element mainly supports providing a unified policy framework to control network behavior and providing a policy rule for a control layer network function, and is responsible for obtaining user subscription information related to a policy decision. In a 4G communication system, the policy control network element may be a policy and charging rules function (policy and charging rules function, PCRF) network element. In the 5G communication system, the policy control network element may be a policy control function (policy control function, PCF) network element. In the future communication system, the policy control network element may still be a PCF network element, or may have another name. This is not limited in this application.

A network repository network element may be configured to provide a network element discovery function and provide, based on a request from another network element, network element information corresponding to a network element type. The NRF further provides a network element management service, for example, network element registration, update, or deregistration, and network element status subscription and push. In the 5G communication system, the network repository network element may be a network registration function (network repository function, NRF) network element. In the future communication system, the network repository network element may still be an NRF network element, or may have another name. This is not limited in this application.

A network exposure function network element may be configured to securely expose, to the outside, a service, a capability, and the like that are provided by a 3GPP network function device. In the 5G communication system, the network exposure function network element may be a network exposure function (network exposure function, NEF) network element. In the future communication system, the network exposure function network element may still be an NEF network element, or may have another name. This is not limited in this application.

A network slice selection network element may be configured to select an appropriate network slice for a service of a terminal. In the 5G communication system, the network slice selection network element may be a network slice selection function (network slice selection function, NSSF) network element. In the future communication system, the network exposure function network element may still be an NSSF network element, or may have another name. This is not limited in this application.

A network data analytics network element may collect data from each network function (network function, NF), for example, the policy control network element, the session management network element, the user plane network element, the access management network element, and the application function network element (through the network capability exposure function network element), and perform analysis and prediction. In the 5G communication system, the network data analytics network element may be a network data analytics function (network data analytics function, NWDAF). In the future communication system, the network exposure function network element may still be an NWDAF network element, or may have another name. This is not limited in this application.

A unified data repository network element is responsible for storing structured data information, including subscription information, policy information, and network data or service data defined in a standard format. In the 5G communication system, the unified data repository network element may be a unified data repository (unified data repository, UDR). In the future communication system, the network exposure function network element may still be a UDR network element, or may have another name. This is not limited in this application.

The network exposure network element is a control plane network element provided by the operator. The network exposure network element securely exposes an external interface of the operator network to a third party. When the session management network element needs to communicate with a third-party network element, the network exposure network element may be used as a relay for communication between the session management network element and the third-party network element. When the network exposure network element serves as the relay, the network exposure network element may translate identification information of a subscriber and identification information of the third-party network element. For example, when sending an SUPI of a subscriber from the operator network to the third party, the network exposure network element may translate the SUPI into an external identity (identity, ID) corresponding to the SUPI. On the contrary, when sending an external ID (a network element ID of the third party) to the operator network, the network exposure network element may translate the external ID into an SUPI. In 5G, the network exposure network element may be an NEF network element. In future communication, for example, in 6G, the network exposure network element may still be an NEF network element, or may have another name. This is not limited in this application.

It may be understood that the foregoing network elements or functions may be network elements in a hardware device, may be software functions running on dedicated hardware, or may be virtualized functions instantiated on a platform (for example, a cloud platform). One or more services may be obtained through division of the foregoing network elements or functions. Further, there may be services that exist independently of network functions. In this application, instances of the functions, instances of services included in the functions, or instances of the services that exist independently of network functions may be referred to as service instances.

It should be understood that FIG. 1 shows an interaction relationship between network function entities and corresponding interfaces. For example, UE and an AMF network element may interact with each other through an N1 interface, an access network device and the AMF network element may interact with each other through an N2 interface, the access network device and a UPF network element may interact with each other through an N3 interface, the UPF network element and a DN may interact with each other through an N6 interface, the UPF network element and an SMF network element may interact with each other through an N4 interface, the AMF network element and a PCF network element may interact with each other through an N15 interface, the AMF network element and the SMF network element may interact with each other through an N11 interface, the SMF network element and the PCF network element may interact with each other through an N7 interface, the PCF network element and an AF network element may interact with each other through an N5 interface, and the SMF network element and a UDM network element may interact with each other through an N10 interface. Interaction between other network function entities is similar, and details are not described again.

It may be understood that the foregoing network elements or functions may be network elements in a hardware device, may be software functions running on dedicated hardware, or may be virtualized functions instantiated on a platform (for example, a cloud platform). Optionally, the foregoing network element or function may be implemented by one device, may be jointly implemented by a plurality of devices, or may be implemented by one functional module in one device. This is not specifically limited in embodiments of this application.

It should be understood that FIG. 1 is merely an example of an applicable network architecture, and an actually applied network architecture may include more or fewer network elements than those in FIG. 1. In the future communication system, a function of each network element used in embodiments of this application may remain the same, but a name of each network element may change.

Based on the foregoing content, FIG. 2 to FIG. 5 are example diagrams of four communication system architectures to which embodiments of this application are applicable. As shown in FIG. 2 to FIG. 5, in embodiments of this application, a passive terminal is used as a new type of terminal device, and a core network element (for example, a terminal management function network element or a terminal management function-control plane) performs a target operation (for example, a read operation/write operation) on the terminal. It may be understood that the terminal management function network element is merely an example name, and all devices that can implement functions corresponding to the terminal management function network element in this application may be understood as the terminal management function network element in this application.

As shown in FIG. 2, the communication system may include a terminal, an access network device, an AMF, an SMF, a UPF, a terminal management function network element, and a DN. The DN includes an AF, an application server (application, AS), and an authentication, authorization, and accounting (authentication, authorization, accounting, AAA) server. The terminal management function network element may be connected to the AMF and the AF separately. It may be understood as that the terminal management function network element is located between interfaces of the AMF and the AF. The terminal management function network element may be located in an NEF.

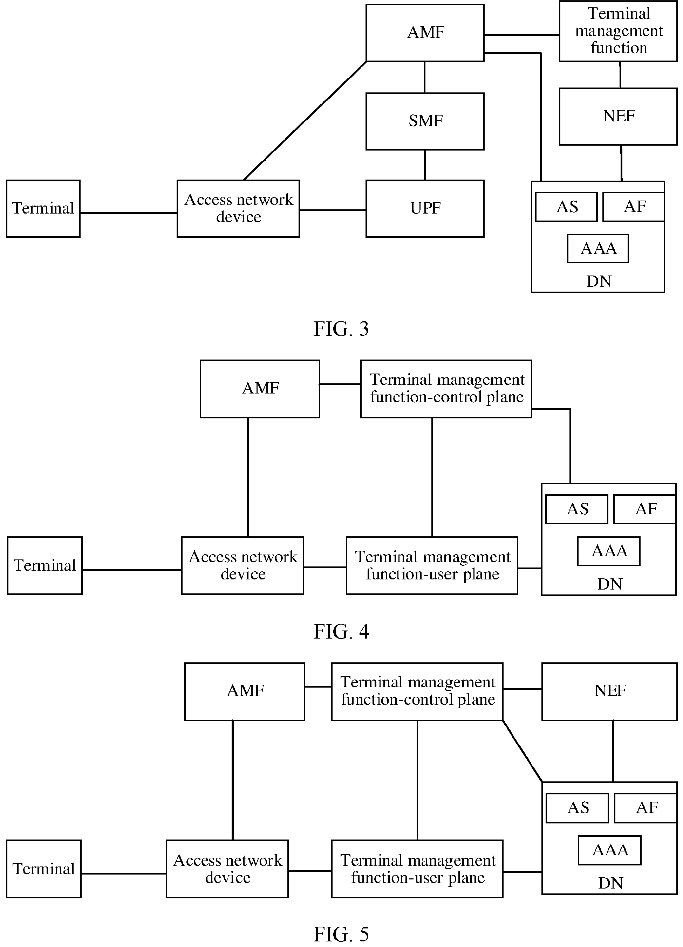

As shown in FIG. 3, the communication system may include a terminal, an access network device, an AMF, an SMF, a UPF, an NEF, a terminal management function network element, and a DN. The DN includes an AF, an AS, and an AAA server. The terminal management function network element may be connected to the AMF and the NEF separately. It may be understood that the terminal management function network element is located between interfaces of the AMF and the NEF.

As shown in FIG. 4, the communication system may include a terminal, an access network device, an AMF, a terminal management function network element, and a DN. The DN includes an AF, an AS, and an AAA server. The terminal management function network element may include a user plane and a control plane. The control plane of the terminal management function network element is connected to the AF, and the user plane of the terminal management function network element is connected to the AS.

As shown in FIG. 5, the communication system may include a terminal, an access network device, an AMF, an NEF, a terminal management function network element, and an AF. The terminal management function network element may include a user plane and a control plane. The control layer of the terminal management function network element is connected to the AF via the NEF, and may be specifically connected to a control plane of the AF via the NEF. The user plane of the terminal management function network element is connected to the AS, and may be specifically connected to a user plane of the AS.

FIG. 2 to FIG. 5 merely show examples of four possible implementations. For descriptions of related network elements in FIG. 2 to FIG. 5, refer to the descriptions in FIG. 1. Details are not described herein again.

An access network device may integrate capabilities of a reader/writer, and send a radio signal to an RFID-capable terminal device (for example, a passive, semi-passive, or semi-active terminal device, or a passive terminal device); and the terminal device uses energy converted from the radio signal to drive the terminal device to operate. When being in an operating state, the terminal device may send, under control of a control plane network element (for example, a terminal management function network element), an execution result corresponding to an operation such as a read/write operation. When the execution result is not transmitted through the control plane network element (for example, is transmitted through a user plane network element), the control plane network element does not know whether the terminal device has performed the operation. Consequently, the control plane network element cannot manage a plurality of terminal devices. Based on this, a communication method for managing a terminal device is proposed.

The communication method provided in embodiments of this application may be applied to industry, enterprises, agriculture, animal husbandry, forestry, and the like. In an example for description, the method may be applied to product management in industry. For example, management such as scanning and statistics collection may be automatically performed on a product by carrying a tag on the product. In another example for description, the method may be applied to industrial management on a device (for example, a forklift truck, a trailer, or an automated guided vehicle (automated guided vehicle, AGV)). For example, a life cycle, utilization, a location, and the like of a device may be managed by installing a tag on the device. In still another example for description, the method may be applied to management of breeding products (such as pigs, cattle, sheep, or chickens) in animal husbandry. For example, management such as statistics collection on breeding products may be implemented by fixing tags on the breeding products. In still another example for description, the method may be applied to tree management in forestry. For example, management such as statistics collection on trees may be implemented by fixing tags on the trees.

The following describes the technical solutions in embodiments of this application with reference to the accompanying drawings in embodiments of this application.

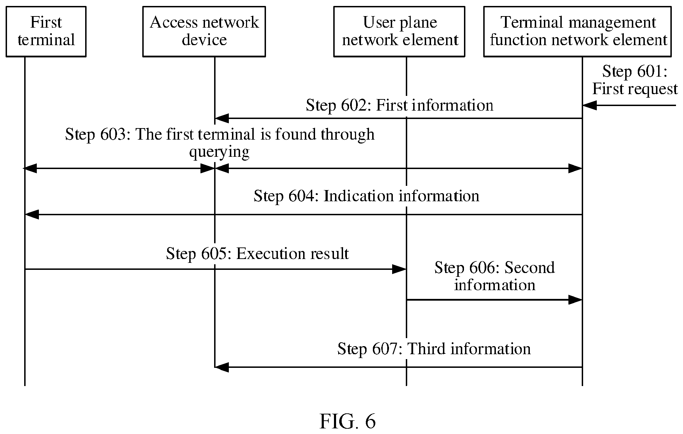

FIG. 6 is a schematic flowchart of a communication method according to this application. The method includes the following steps.

Step 601: A terminal management function network element receives a first request for performing a target operation on a target terminal.

The first request may be from an application network element (for example, an AF). In other words, the AF sends the first request to the terminal management function network element. Correspondingly, the terminal management function network element receives the first request from the AF, where the first request is for requesting to perform the target operation on the target terminal. The first request may be referred to as an inventory request.

As defined in this application, a terminal on which an operation is to be performed is referred to as a target terminal, and the target terminal includes a plurality of terminals.

As defined in this application, an operation to be performed on any target terminal is referred to as a target operation. The target operation includes one or more operations. For different target terminals, target operations to be performed may be the same or may be different.

For example, the first request may include one or more of the following: target terminal information or an application identifier.

The target terminal information indicates the target terminal. The target terminal may be referred to as an inventory object. For example, the target terminal information includes one or more of the following: indication information of the target terminal, an identifier value range of the target terminal, an identifier list of the target terminal, a group identifier of a target terminal group, identification information of a user to which the target terminal belongs, a type of the target terminal, or identification information of an application to which the target terminal belongs. It should be understood that the target terminal information may be some features of identification information of the target terminal.

The application identifier identifies the AF network element that initiates the first request. The AF and the terminal management function network element may agree in advance on target terminals on which the AF is to perform an operation. In this case, even if the first request does not include the target terminal information, the terminal management function network element may determine the target terminal based on the application identifier.

Optionally, the first request further includes target operation information, and the target operation may be an operation of obtaining an identifier of the target terminal (which may also be referred to as an inventory operation, a stocktaking operation, or Inventory), a read operation, a write operation, a deletion operation, an encryption operation, an access operation, a block write operation, a block erase operation, or a kill operation. Further, optionally, the first request may include an operation parameter corresponding to the target operation. The target operation information may be referred to as an execution command, or the target operation information and the operation parameter corresponding to the target operation are collectively referred to as an execution command. For example, an operation parameter corresponding to a read operation may include a read memory bank, a start byte address of the read memory bank, a quantity of bytes of the read memory bank, and the like. An operation parameter corresponding to a write operation may include a write memory bank, a start byte of the read memory bank, and written data. For the write operation, same information may be written for all terminals in the target terminal, in other words, the first request may include same written information for different terminals; or different information may be separately written for different terminals, in other words, the first request may include different written information for different terminals. An operation of obtaining an identifier of the target terminal (which may also be referred to as an inventory operation, a stocktaking operation, or Inventory) may not need to be carried in the first request. For example, when the first request does not include the target operation, it indicates that the first request is for obtaining the identifier of the target terminal. In an implementation, an operation in which the terminal management function network element obtains the identifier of the target terminal may be indicated in an explicit manner. For example, the first request may include information about the operation of obtaining the identifier of the target terminal. Alternatively, the operation of obtaining the identifier of the target terminal may be indicated in an implicit manner. For example, the first request may not include information about any operation, and in this case, the target operation indicated by the first request is the operation of obtaining the identifier of the target terminal.

Optionally, the first request may further include target area information A, and the target area information A indicates an area corresponding to the target terminal. For example, the target area information A may be a geographical location, a municipal location, or 3GPP location information (for example, a tracking area (tracking area, TA) list or a cell list) corresponding to the target terminal.

The terminal management function network element may determine an access network device based on one or more of the following information: the target terminal information, the application identifier, the target area information A, or the like.

Optionally, the first request may further include a first address. For example, the first address is an address used by the AF network element to receive an execution result of performing the target operation by the target terminal, and may also be referred to as AS tunnel information.

Optionally, the first request may further include an address of an AAA server that performs authentication, and the terminal management function network element may initiate bidirectional authentication between the terminal and the AAA server. In this process, the terminal may obtain a key used for data encryption, and the terminal may encrypt, by using the key, data in the execution result of performing the operation.

Optionally, the first request may further include a first identifier, and the first identifier identifies the first request.

In the architecture shown in FIG. 2, or another architecture in which the terminal management function network element is integrated in an NEF network element, the first request may be directly sent by the AF network element to the terminal management function network element (the terminal management function network element may be a terminal management function in FIG. 2).

In the architecture shown in FIG. 3, the first request is sent to the terminal management function network element (the terminal management function network element may be a terminal management function in FIG. 3) via the NEF network element. In this case, the NEF network element may map the received first request and then send a mapped first request to the terminal management function network element. For example, the NEF network element maps a received geographical location to a cell list, a TA list, or the like.

In the architecture shown in FIG. 4, the terminal management function network element may be a terminal management function-control plane, and the first request may be directly sent by the AF network element to the terminal management function network element.

In the architecture shown in FIG. 5, the terminal management function network element may be a terminal management function-control plane, and the first request is sent to the terminal management function network element via the NEF network element.

Step 602: The terminal management function network element sends first information to the access network device. Correspondingly, the access network device receives the first information from the terminal management function network element.

The first information indicates to query for the target terminal, or the first information indicates to obtain the identifier of the target terminal, or indicates to perform the target operation on the target terminal. The first information may be referred to as an inventory request.

For example, the first information may include the target terminal information, and the target terminal information indicates the target terminal.

Further, optionally, the first information includes at least one of the following: the first identifier and a tunnel establishment indication.

The first identifier identifies the first request, and the first identifier is generated by the terminal management function network element for the first request, or the first identifier is from the first request.

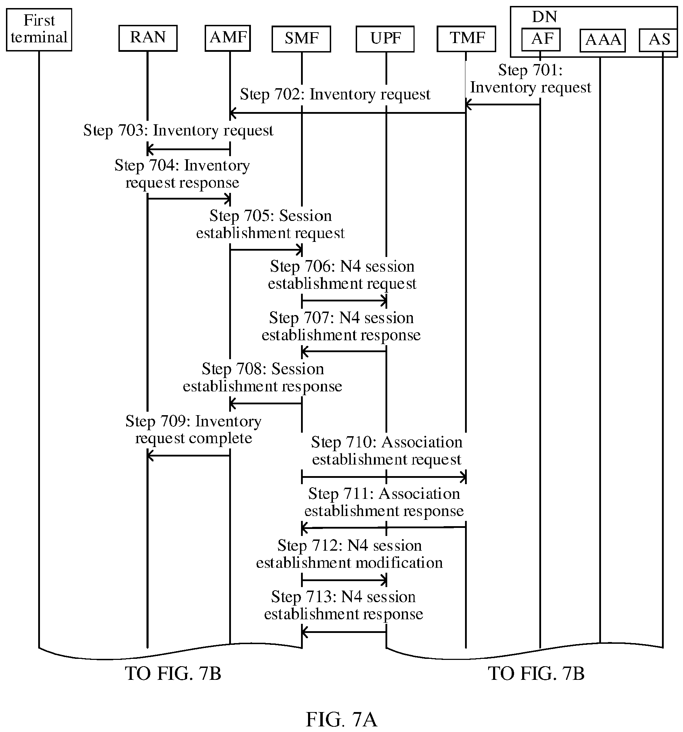

The terminal management function network element determines to report data by using a user plane. The first information may include the tunnel establishment indication, where the tunnel establishment indication indicates to establish a user plane tunnel between the access network device and a user plane network element. The access network device may establish the user plane tunnel with the user plane network element based on the tunnel establishment indication. Alternatively, even if the first information does not include the tunnel establishment indication, the access network device may establish a user plane tunnel with the user plane network element. For a process of establishing the user plane tunnel between the access network device and the user plane network element, refer to an existing user plane tunnel establishment process, or refer to specific examples described in FIG. 7A and FIG. 7B, FIG. 8A and FIG. 8B, and FIG. 9A and FIG. 9B.

When sending the first information to the access network device, the terminal management function network element may directly send the first information to the access network device, or may send the first information to the access network device via another network element (for example, an AMF network element).

Step 603: The access network device queries for the target terminal (or obtains the identification information of the target terminal) in response to the first information, and notifies the terminal management function network element of a first terminal found through querying.

The first terminal is any terminal in the target terminal.

In an implementation, the access network device sends radio frequency information to target terminals within a coverage area of the access network device, to provide excitation signals for the target terminals within the coverage area of the access network device, so that the target terminals send signals to the access network device. In addition, the access network device performs a selection operation on the target terminals within the coverage area, and may select one or more target terminals by using the selection operation. Further, the access network device may send a query command to the one or more selected target terminals. After receiving the query command, the one or more selected target terminals initiate a random access process, where one terminal successfully performs random access, and the terminal may be considered as the first terminal in this embodiment. The first terminal sends a response message (the response message is, for example, a registration request) to the access network device, where the response message includes an identifier of the first terminal. A specific random access process may be as follows: The access network device includes a first random number in the query command, and the selected one or more terminals locally set a second random number based on the first random number. If a second random number set by a terminal is 0, the terminal sends a third random number to the access network device. If the access network device can correctly receive the third random number, the access network device sends the third random number to the terminal. When receiving the third random number, the terminal determines that random access succeeds, and the terminal is considered as the first terminal in this embodiment.

After receiving the response information (the response message is, for example, a registration request) from the first terminal, the access network device may send fourth information to the terminal management function network element. Correspondingly, the terminal management function network element receives the fourth information from the access network device, and the fourth information indicates that the first terminal is found through querying. After receiving the fourth information, the terminal management function network element may determine that the first terminal is found through querying. For example, the fourth information includes the identifier of the first terminal. For example, the fourth information may be a registration request. Further, optionally, the fourth information includes the first identifier (the first identifier identifies the first request). The terminal management function network element may determine, based on the first identifier, that the fourth information is related to the first request. When the fourth information includes the first identifier, the fourth information may include the registration request and the first identifier. Further, optionally, the fourth information includes an identifier of the access network device.

Further, optionally, after determining that the first terminal is found through querying, the terminal management function network element may initiate bidirectional authentication between the first terminal and the AAA server.

Step 604: The terminal management function network element sends indication information to the first terminal found through querying by the access network device. Correspondingly, the first terminal receives the indication information from the terminal management function network element.

The indication information indicates a target operation corresponding to the first terminal. For example, the indication information includes information about the target operation.

The indication information may be registration accept, or the indication information is carried in registration accept.

When sending the indication information to the first terminal, the terminal management function network element may directly send the indication information to the first terminal, or may send the indication information to the first terminal via another network element (for example, the access network device or the AMF network element).

Step 605: The first terminal sends an execution result to the user plane network element. Correspondingly, the user plane network element receives the execution result from the first terminal.

The execution result of performing, by the first terminal, an operation indicated by the indication information is sent by the first terminal to the user plane network element.

The execution result includes the identifier of the first terminal. Further, optionally, the execution result includes at least one of the following: information about the operation indicated by the indication information, and data generated by performing, by the first terminal, the operation indicated by the indication information. In the example in FIG. 6, the execution result includes at least one of the following: the information about the target operation and data generated by performing the target operation by the first terminal. The data may be, for example, data read by the first terminal from a memory bank. The data may be encrypted. For example, the data may be encrypted by using a key obtained in bidirectional authentication between the terminal and the AAA server.

The first terminal sends the execution result to the user plane network element via the access network device. For example, the execution result is sent by the first terminal to the access network device, and is sent by the access network device to the user plane network element through the user plane tunnel between the access network device and the user plane network element. In other words, the user plane network element receives the execution result based on the user plane tunnel between the access network device and the user plane network element. The target terminals within the coverage of the access network device correspond to a same user plane tunnel, that is, the user plane tunnel is at an access network device granularity. For example, the execution result is sent by the first terminal to the access network device, and is sent by the access network device to the user plane network element through a user plane tunnel that is between the access network device and the user plane network element and that is established for the first terminal. In other words, the user plane network element receives the execution result based on the user plane tunnel that is between the access network device and the user plane network element and that is established for the first terminal. Different target terminals within the coverage of the access network device correspond to different user plane tunnels, that is, the user plane tunnel is at a terminal granularity.

An execution result corresponding to another terminal in the target terminal is sent by the another terminal to the user plane network element. A specific process thereof is the same as the process in which the first terminal sends the execution result to the user plane network element, and mutual reference may be made.

Further, optionally, the user plane network element may send the execution result to the first address. For example, the first address is an address used by the AF network element to receive the execution result of performing the target operation by the target terminal, and may also be referred to as AS tunnel information.

In the architectures shown in FIG. 2 and FIG. 3, the user plane network element is a UPF, and the terminal management function network element is a terminal management function.

In the architectures shown in FIG. 4 and FIG. 5, the user plane network element is a terminal management function-user plane, and the terminal management function network element is a terminal management function-control plane.

Step 606: The user plane network element sends second information to the terminal management function network element. Correspondingly, the terminal management function network element receives the second information from the user plane network element.

The second information is sent by the user plane network element after the user plane network element receives the execution result of performing, by the first terminal, the operation indicated by the indication information. It may be understood as that, the second information indicates that the user plane network element receives, from the first terminal, the execution result of performing the operation indicated by the indication information. The second information may be a report.

For example, the second information includes the identifier of the first terminal. Further, optionally, the second information includes the information about the operation indicated by the indication information. In the example in FIG. 6, the second information includes the information about the target operation. The identifier of the first terminal is carried in the second information, to indicate that the execution result received by the user plane network element is the execution result of the first terminal. The information about the operation is carried in the second information, so that the terminal management function network element can more accurately determine, based on the information about the operation carried in the second information, whether the first terminal has completed the target operation.

The user plane network element may directly send the second information to the terminal management function network element. For example, in the architectures shown in FIG. 4 and FIG. 5, the user plane network element (namely, the terminal management function-user plane) may directly send the second information to the terminal management function network element (namely, the terminal management function-control plane). Alternatively, the user plane network element may send the second information to the terminal management function network element via another network element (for example, the AMF or an SMF). For example, in the architectures shown in FIG. 2 and FIG. 3, the user plane network element (namely, the UPF) may send the second information to the terminal management function network element (namely, the terminal management function) via an SMF.

Step 607: The terminal management function network element sends third information to the access network device. Correspondingly, the access network device receives the third information from the terminal management function network element.

The third information indicates to query for another terminal that is not found through querying in the target terminal; or the third information indicates that the target operation corresponding to the first terminal is completed; or the third information indicates to obtain identification information of another terminal in the target terminal; or the third information indicates to perform a next random access procedure.

For example, the third information may include the identifier of the first terminal. Further, optionally, the third information may include an indication indicating that the target operation is completed and/or the identifier of the access network device.

After performing the target operation indicated by the indication information sent by the terminal management function network element, the first terminal reports the execution result to the user plane network element. After receiving the execution result, the user plane network element sends the second information to the terminal management function network element. Theoretically, after receiving the second information from the user plane network element, the terminal management function network element may determine that the first terminal has completed the target operation, and then trigger sending of the third information to the access network device. Further, optionally, the second information includes the information about the operation indicated by the indication information. Before sending the third information to the access network device, the terminal management function network element may further determine whether an operation corresponding to the information about the operation that is included in the second information is the same as the target operation corresponding to the first terminal. If the operation is the same as the target operation, the terminal management function network element determines that the first terminal has completed the target operation, and then may trigger sending of the third information to the access network device.

When sending the third information to the access network device, the terminal management function network element may directly send the third information to the access network device, or may send the third information to the access network device via another network element (for example, the AMF).

In this application, the terminal management function network element queries for the target terminal within the coverage of the access network device via the access network device. The terminal management function network element can perform the target operation on the target terminal found through querying. After a terminal found through querying performs the target operation, the terminal reports an execution result to the user plane network element. The user plane network element may notify the terminal management function network element that the execution result of the terminal is received, so that the terminal management function network element controls the access network device to query for a next terminal. Management of a plurality of target terminals is implemented in this process.

In addition, the user plane network element may be deployed locally, and transmission of the execution result is performed via the user plane network element, so that local processing can be implemented, and security can be improved.

After step 607, the access network device finds a second terminal through querying, and the terminal management function network element performs a target operation on the second terminal. An example is as follows:

After step 607, the access network device finds, in response to the third information, the second terminal through querying, and notifies the terminal management function network element of the second terminal. This process is similar to that of finding the first terminal through querying. For details, refer to related descriptions in step 603.

The terminal management function network element sends indication information to the second terminal found through querying by the access network device. Correspondingly, the second terminal receives the indication information from the terminal management function network element. The indication information indicates a target operation corresponding to the second terminal. For example, the indication information includes information about the target operation. This process is similar to that of sending the indication information to the first terminal. For details, refer to related descriptions in step 604.

The second terminal sends an execution result to the user plane network element. Correspondingly, the user plane network element receives the execution result from the second terminal. The execution result includes an identifier of the second terminal. Further, optionally, the execution result includes at least one of the following: information about an operation indicated by the indication information (for example, information about the target operation), and data generated by performing, by the second terminal, the operation (for example, the target operation) indicated by the indication information. This process is similar to a process in which the first terminal sends the execution result to the user plane network element. For details, refer to related descriptions of step 605.

The user plane network element sends information a to the terminal management function network element. Correspondingly, the terminal management function network element receives the information a from the user plane network element. The information a is sent by the user plane network element after the user plane network element receives the execution result of performing, by the second terminal, the operation (for example, the target operation) indicated by the indication information. It may be understood as that, the second information indicates that the user plane network element receives, from the second terminal, the execution result of performing the operation (for example, the target operation) indicated by the indication information. The information a may include the identifier of the second terminal. Further, optionally, the information a includes the information about the operation indicated by the indication information (for example, the information about the target operation). This process is similar to a process in which the user plane network element sends the second information to the terminal management function network element for the first terminal. For details, refer to related descriptions of step 606.

The terminal management function network element sends information b to the access network device. Correspondingly, the access network device receives the information b from the terminal management function network element. The information b indicates to query for another terminal that is not found through querying in the target terminal; or the information b indicates that the target operation corresponding to the second terminal in the target terminal is completed; or the information b indicates to obtain identification information of another terminal in the target terminal; or the information b indicates to perform a next random access procedure. This process is similar to a process in which the terminal management function network element sends the third information to the access network device. For details, refer to related descriptions of step 607.

Regardless of whether the target operation includes one operation or a plurality of operations, the terminal management function network element may send the target operation to the terminal by using one piece of indication information. In this way, signaling overheads can be reduced. For example, in step 604, the terminal management function network element sends the indication information to the first terminal, where the indication information indicates the target operation.

When the target operation includes a plurality of operations, the terminal management function network element may alternatively send the target operation to the terminal by using a plurality of pieces of indication information. The first terminal is used as an example for description:

For example, step 604 is replaced with the following step: The terminal management function network element sends at least one piece of indication information to the first terminal. Correspondingly, the first terminal receives the at least one piece of indication information from the terminal management function network element. For example, step 607 is replaced with the following step: When determining that at least one piece of second information from the user plane network element is received, the terminal management function network element sends the third information to the access network device. For other processes, refer to example descriptions in FIG. 6. Details are not described again.

Any piece of indication information indicates at least one operation in the target operation. For example, the indication information includes information about at least one operation in the target operation. If the at least one piece of indication information is one piece of indication information, the indication information indicates the target operation. If the at least one piece of indication information includes a plurality of pieces of indication information, different pieces of indication information indicate different operations, and a set of operations indicated by the plurality of pieces of indication information is the target operation. For example, the target operation includes an operation 1 to an operation 5, the at least one piece of indication information includes first indication information and second indication information, the first indication information indicates the operation 1 and the operation 2, and the second indication information indicates the operation 3 to the operation 5.

When the terminal management function network element sends a plurality of pieces of indication information to the first terminal, a sequence in which the terminal management function network element sends the indication information to the first terminal and the terminal management function network element receives the second information from the user plane network element may not be limited. For example, the target operation includes an operation 1 to an operation 6, and the terminal management function network element sends, to the first terminal, three pieces of indication information: first indication information, second indication information, and third indication information. The first indication information indicates the operation 1 and the operation 2, the second indication information indicates the operation 3 to the operation 5, and the third indication information indicates the operation 6. For example, after sending the first indication information to the first terminal, the terminal management function network element receives second information corresponding to the first indication information. After receiving the second information corresponding to the first indication information, the terminal management function network element sends the second indication information and the third indication information to the first terminal, and then the terminal management function network element receives second information corresponding to the second indication information and second information corresponding to the third indication information. For another example, after sending the first indication information to the first terminal, the terminal management function network element receives second information corresponding to the first indication information. Then, the terminal management function network element sends the second indication information to the first terminal, and the terminal management function network element receives second information corresponding to the second indication information. Next, the terminal management function network element sends the third indication information to the first terminal, and receives second information corresponding to the third indication information.

After performing the operation indicated by the indication information sent by the terminal management function network element, the first terminal reports the execution result to the user plane network element. After receiving the execution result, the user plane network element sends the second information to the terminal management function network element. Theoretically, a quantity of pieces of indication information sent by the terminal management function network element to the first terminal is the same as a quantity of pieces of second information received by the terminal management function network element from the user plane network element. For example, the terminal management function network element sends n (n is an integer greater than or equal to 1) pieces of indication information (a set of operations indicated by the n pieces of indication information is the target operation) to the first terminal, and theoretically, the terminal management function network element also receives n pieces of second information from the user plane network element. Based on this, after receiving the n pieces of second information from the user plane network element, the terminal management function network element may determine that the first terminal has completed the target operation, and then may trigger sending of the third information to the access network device. Further, optionally, the second information corresponding to the indication information includes the information about the operation indicated by the indication information. Before sending the third information to the access network device, the terminal management function network element may further determine whether the operation corresponding to the information about the operation that is included in the at least one piece of second information is the same as the target operation corresponding to the first terminal. If the operation is the same as the target operation, the terminal management function network element determines that the first terminal has completed the target operation, and then may trigger sending of the third information to the access network device.

In a specific example, each time after receiving second information corresponding to one piece of indication information, the terminal management function network element may determine whether the first terminal has completed the target operation, and when determining that the first terminal has completed the target operation, the terminal management function network element sends the third information to the access network device; or when determining that the first terminal has not completed the target operation, the terminal management function network element sends another piece of indication information. For example, the terminal management function network element first sends the first indication information to the first terminal, and after receiving the second information corresponding to the first indication information, the terminal management function network element may determine whether the first terminal has completed the target operation. If the first terminal has not completed the target operation, the terminal management function network element sends the second indication information to the first terminal. After receiving the second information corresponding to the second indication information, the terminal management function network element may determine again whether the first terminal has completed the target operation. If the first terminal still has not completed the target operation, the terminal management function network element sends the third indication information to the first terminal. By analogy, the terminal management function network element sends the third information to the access network device until determining that the first terminal has completed the target operation. In addition, after receiving the second information corresponding to the first indication information, when determining that the first terminal has completed the target operation, the terminal management function network element may send the third information to the access network device. Alternatively, after receiving the second information corresponding to the second indication information, when determining that the first terminal has completed the target operation, the terminal management function network element may send the third information to the access network device.

The terminal management function network element may record a mapping relationship between the identifier of the first terminal and a completed operation, and the terminal management function network element may determine, based on the mapping relationship, whether the first terminal has completed the target operation. In an example, after sending any piece of indication information to the first terminal, the terminal management function network element may add, based on the indication information, a mapping relationship between the identifier of the first terminal and the operation indicated by the indication information to the mapping relationship between the identifier of the first terminal and the completed operation. In another example, second information corresponding to any piece of indication information further includes information about an operation indicated by the any piece of indication information. After receiving any piece of second information, the terminal management function network element may add, based on the second information, a mapping relationship between the identifier of the first terminal and an operation indicated by information about the operation that is included in the second information to the mapping relationship between the identifier of the first terminal and the completed operation.

In the foregoing descriptions, after receiving the execution result of the terminal, the user plane network element sends the second information to the terminal management function network element (for example, step 605 and step 606). For example, a policy rule is configured in the user plane network element, the policy rule may be used for detecting whether to report an identifier of the terminal, and the user plane network element sends the second information according to the policy rule. The policy rule indicates the user plane network element to send (for example, to the terminal management function network element or another network element) the second information (which may also be understood as sending an identifier of any terminal) after receiving an execution result of performing any operation in the target operation by the any terminal in the target terminal. The policy rule includes the target terminal information and indication information for reporting an identifier of any terminal after an execution result of the any terminal in the target terminal is received.

The policy rule in the user plane network element may be configured by the terminal management function network element. To be specific, the terminal management function network element may send the policy rule to the user plane network element. Correspondingly, the user plane network element receives the policy rule from the terminal management function network element. For example, the terminal management function network element directly sends the policy rule to the user plane network element. For example, in the architectures shown in FIG. 4 and FIG. 5, the terminal management function network element (namely, the terminal management function-control plane) may directly send the policy rule to the user plane network element (namely, the terminal management function-user plane). For example, the terminal management function network element may send the policy rule to the user plane network element via another network element (for example, the AMF or the SMF). For example, in the architectures shown in FIG. 2 and FIG. 3, the terminal management function network element (namely, the terminal management function) may send the policy rule to the user plane network element (namely, the UPF) via the SMF.

In an optional example, when sending (for example, directly sending or sending via another network element) the policy rule to user plane network element, the terminal management function network element may include the first identifier (the first identifier identifies the first request), and the user plane network element may determine, based on the first identifier, that the policy rule is a policy rule configured for the first request.

In another optional example, before sending the policy rule to the user plane network element, the terminal management function network element establishes an association with a session management network element. In this way, when sending the policy rule to the user plane network element, the terminal management function network element sends the policy rule to the user plane network element via the session management network element based on the association. The policy rule formulated for the first request is sent over the established association, so that an identifier identifying the first request does not need to be carried. In this way, resources can be saved.

The terminal management function network element establishes the association with the session management network element. For example, the session management network element sends a second request to the terminal management function network element. Correspondingly, the terminal management function network element receives the second request from the session management network element, where the second request is for requesting to establish the association between the session management network element and the terminal management function network element for the first request. Further, the terminal management function network element establishes the association between the terminal management function network element and the session management network element for the first request. Optionally, the second request includes the first identifier (the first identifier identifies the first request). That the terminal management function network element establishes the association between the terminal management function network element and the session management network element for the first request may be specifically as follows: The terminal management function network element establishes the association between the terminal management function network element and the session management network element for the first identifier. In the process of establishing the user plane tunnel between the access network device and the user plane network element, the access network device sends the first identifier to the session management network element, and the user plane tunnel between the access network device and the user plane network element is for transmission of an execution result of performing any operation in the target operation by any terminal in the target terminal. In addition to the first identifier, the first request may further include information that can identify the first request, for example, the target terminal information and the target operation information.

The second request sent by the session management network element to the terminal management network element may be an association establishment request. The terminal management network element may send information about the policy rule to the terminal management network element by using an association establishment response. The session management network element may send the information about the policy rule to the user plane network element by using an N4 session establishment modification.

In the foregoing descriptions, after receiving the execution result of the terminal, the user plane network element sends the second information to the terminal management function network element (for example, step 605 and step 606). In an optional example, when the user plane network element sends (for example, directly sends or sends via another network element) the second information to the terminal management function network element, the second information further includes the first identifier (the first identifier identifies the first request). The terminal management function network element may determine, based on the first identifier, that the second information is related to the first request. In another optional example, before the user plane network element sends the second information to the terminal management function network element, the terminal management function network element establishes an association with the session management network element. In this way, when receiving the second information from the user plane network element, the terminal management function network element can receive, based on the association, the second information from the user plane network element via the session management network element. The second information triggered for the first request is sent over the established association, so that an identifier identifying the first request does not need to be carried. In this way, resources can be saved. For a process of establishing the association between the terminal management function network element and the session management network element, refer to the foregoing descriptions. Details are not described again.

For ease of understanding of embodiments of this application, the following describes terminal management with reference to the communication system architecture shown in FIG. 2.

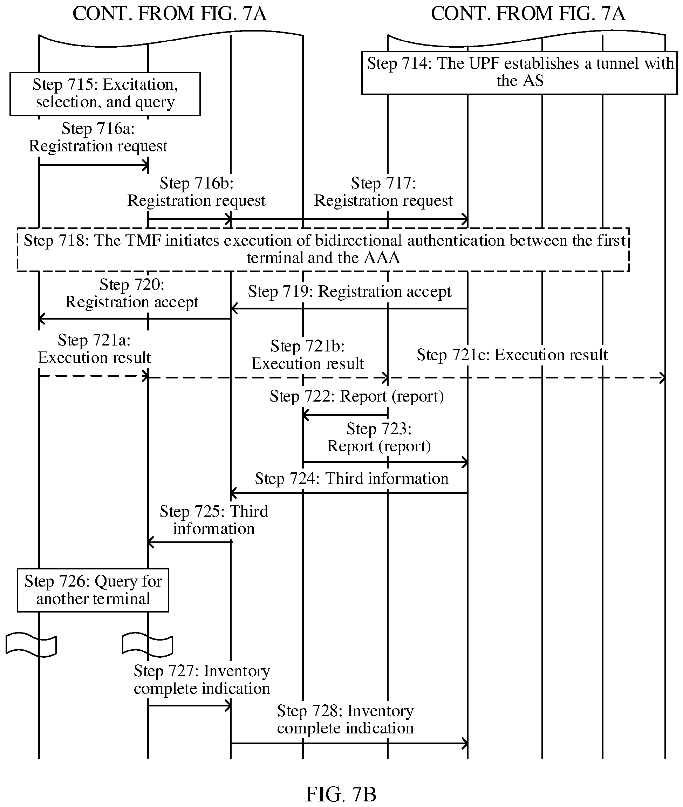

FIG. 7A and FIG. 7B are a schematic flowchart of a communication method according to this application. The method includes the following steps.

Step 701: An AF sends an inventory request to a TMF. Correspondingly, the TMF receives the inventory request from the AF.

The inventory request is for requesting to perform a target operation on a target terminal. For the inventory request, refer to the first request in step 601.

For example, the inventory request may include one or more of the following: target terminal information or an application identifier.

The target terminal information indicates the target terminal. For example, the target terminal information includes one or more of the following: indication information of the target terminal, an identifier value range of the target terminal, an identifier list of the target terminal, a group identifier of a target terminal group, identification information of a user to which the target terminal belongs, a type of the target terminal, or identification information of an application to which the target terminal belongs. It should be understood that the target terminal information may be some features of identification information of the target terminal.

The application identifier identifies the AF network element that initiates the inventory request. The AF and the TMF may agree in advance on target terminals on which the AF performs the operation. For the TMF, even if the inventory request does not include the target terminal information, the TMF may determine the target terminal based on the application identifier.

Optionally, the inventory request further includes target operation information, and the target operation may be an operation of obtaining an identifier of a target terminal (which may also be referred to as an inventory operation, a stocktaking operation, or Inventory), a read operation, a write operation, a deletion operation, an encryption operation, an access operation, a block write operation, a block erase operation, or a kill operation. Further, optionally, the inventory request may include an operation parameter corresponding to the target operation. For example, an operation parameter corresponding to a read operation may include a read memory bank, a start byte address of the read memory bank, a quantity of bytes of the read memory bank, and the like. An operation parameter corresponding to a write operation may include a write memory bank, a start byte of the read memory bank, and written data. For the write operation, same information may be written for all terminals in the target terminal, in other words, the inventory request may include same written information for different terminals; or different information may be separately written for different terminals, in other words, the inventory request may include different written information for different terminals. An operation of obtaining an identifier of the target terminal (which may also be referred to as an inventory operation, a stocktaking operation, or Inventory) may not need to be carried in the inventory request. For example, when the inventory request does not include the target operation, it indicates that the inventory request is for obtaining the identifier of the target terminal. In an implementation, an operation in which the TMF obtains the identifier of the target terminal may be indicated in an explicit manner. For example, the inventory request may include information about the operation of obtaining the identifier of the target terminal. Alternatively, the operation of obtaining the identifier of the target terminal may be indicated in an implicit manner. For example, the inventory request may not include information about any operation, and in this case, the target operation indicated by the inventory request is the operation of obtaining the identifier of the target terminal.

Optionally, the inventory request may further include target area information A, and the target area information A indicates an area corresponding to the target terminal. For example, the target area information A may be a geographical location, a municipal location, or 3GPP location information (for example, a tracking area (tracking area, TA) list or a cell list) corresponding to the target terminal.

The TMF may determine an access network device based on one or more of the following information: the target terminal information, the application identifier, the target area information A, or the like.

Optionally, the inventory request may further include a first address. For example, the first address is an address used by the AF network element to receive the execution result of performing the target operation by the target terminal, and may also be referred to as AS tunnel information. The first address may be notified to a UPF.

Optionally, the inventory request may further include an address of an AAA server that performs authentication, and the TMF may initiate bidirectional authentication between the terminal and the AAA server. In this process, the terminal may obtain a key used for data encryption, and the terminal may encrypt, by using the key, data in the execution result of performing the operation.

Optionally, the inventory request may further include a first identifier, and the first identifier identifies the inventory request.

Step 702: The TMF sends the inventory request to the AMF. Correspondingly, the AMF receives the inventory request from the TMF.

The inventory request is for requesting to perform the target operation on the target terminal.

For example, the inventory request includes the target terminal information.

Further, optionally, the inventory request includes one or more of the following: the application identifier, target area information B, the address of the AAA server that performs authentication, a tunnel establishment indication, or the first identifier.

For the application identifier, the address of the AAA server that performs authentication, and the first identifier, refer to the foregoing descriptions. Details are not described again.

The terminal management function network element determines to report data by using a user plane. The first information may include the tunnel establishment indication, where the tunnel establishment indication indicates to establish a user plane tunnel between the access network device and a user plane network element. The access network device may establish the user plane tunnel with the user plane network element based on the tunnel establishment indication. Alternatively, even if the first information does not include the tunnel establishment indication, the access network device may establish the user plane tunnel with the user plane network element.

The target area information B indicates an area corresponding to the target terminal. For example, the target area information B may be 3GPP location information (for example, a tracking area (tracking area, TA) list or a cell list). It should be noted that, if the target area information A provided by the AF is a geographical location, a municipal location, or the like, the TMF may map the geographical location and the municipal location to 3GPP location information. If the target area information B is managed by different AMFs, the TMF may send an inventory request to each AMF. For different AMF network elements, inventory requests may include different target area information.

The TMF may determine the AMF based on one or more of the following information: the target terminal information, the application identifier, the target area information A, or the like.

Step 703: The AMF sends the inventory request to the access network device (for example, a RAN). Correspondingly, the access network device receives the inventory request from the AMF.

The inventory request is for requesting to perform the target operation on the target terminal, or the inventory request indicates to query for the target terminal, or the inventory request indicates to obtain an identifier of the target terminal.

For example, the inventory request may include target terminal information. Further, optionally, the inventory request includes at least one of the following: the first identifier and the tunnel establishment indication.

The AMF may send the inventory request to the access network device based on the target area information B. If the target area information B covers a plurality of access network devices, the AMF sends an inventory request to each access network device.

Step 704: The access network device sends the inventory request response to the AMF. Correspondingly, the AMF receives the inventory request response from the access network device.

The inventory request response includes one or more of the following: AN tunnel information or an identifier of the access network device. Further, optionally, the inventory request response includes the first identifier.

The AN tunnel information is a user plane endpoint at which the access network device receives downlink data.

The access network device may allocate the AN tunnel information based on a configuration or the tunnel establishment indication.

Step 705: The AMF sends a session establishment request to the SMF. Correspondingly, the SMF receives the session establishment request from the AMF.

The session establishment request includes at least one of the following: the AN tunnel information, the identifier of the access network device, and the first identifier.

The AN tunnel information is the user plane endpoint at which the access network device receives the downlink data. The first identifier identifies the inventory request in step 701.

Step 706: The SMF sends an N4 session establishment request to the UPF. Correspondingly, the UPF receives the N4 session establishment request from the SMF.

The N4 session establishment request includes the AN tunnel information. The AN tunnel information is the user plane endpoint at which the access network device receives the downlink data.

Step 707: The UPF sends an N4 session establishment response to the SMF. Correspondingly, the SMF receives the N4 session establishment response from the UPF.

Optionally, the N4 session establishment response includes CN tunnel information. The CN tunnel information is a user plane endpoint at which the UPF receives uplink data.

Step 708: The SMF sends a session establishment response to the AMF. Correspondingly, the AMF receives the session establishment response from the SMF.

The session establishment response includes the CN tunnel information. The CN tunnel may be returned by the UPF in step 707, or may be allocated by the SMF.

Step 709: The AMF sends inventory request complete information to the access network device. Correspondingly, the access network device receives the inventory request complete information from the AMF.

The inventory request complete information includes the CN tunnel information. The CN tunnel information may be from step 708.

Step 710 may be performed after step 705, step 706, step 707, or step 708.

Step 710: The SMF sends an association establishment request to the TMF. Correspondingly, the TMF receives the association establishment request from the SMF.

The association establishment request is for requesting to establish an association between the SMF and the TMF for the inventory request in step 701. For the association establishment request, refer to the second request described above.

The TMF and the SMF establish the association between the SMF and the TMF for the inventory request in step 701. The SMF may maintain a correspondence between the N4 session established in step 706 and step 707 and the association.

Optionally, the association establishment request includes the first identifier (the first identifier identifies the inventory request in step 701). In addition to the first identifier, the association establishment request may further include information, for example, the target terminal information and the target operation information, that is other than the first identifier and that can identify the first request. Further, optionally, the association establishment request includes the identifier of the access network device.

Step 711: The TMF sends an association establishment response to the SMF. Correspondingly, the SMF receives the association establishment response from the TMF.

The association establishment response includes information about a policy rule formulated for the inventory request in step 701. The information about the policy rule indicates the policy rule. The TMF may send the information about the policy rule to the SMF based on the established association.

The policy rule may be used for detecting whether to report an identifier of a terminal. For example, the policy rule indicates the user plane network element to send an identifier of any terminal after receiving an execution result of performing any operation in the target operation by the any terminal in the target terminal. The policy rule includes the target terminal information and indication information for reporting the identifier of the any terminal after the execution result of the any terminal in the target terminal is received.

Step 712: The SMF sends an N4 session establishment modification to the UPF. Correspondingly, the UPF receives the N4 session establishment modification from the SMF.

The N4 session establishment modification includes policy rule information, and the policy rule information indicates the policy rule.

Step 713: The UPF sends the N4 session establishment response to the SMF. Correspondingly, the SMF receives the N4 session establishment response from the UPF.

The N4 session establishment response indicates that the N4 session establishment request is received.

Step 714: The UPF establishes a user plane tunnel with the AS, where the user plane tunnel is for transmission of the execution result.

A sequence of step 713 and step 714 is not limited.

After step 703, the access network device may query for the target terminal, and notify the TMF of a terminal found through querying, so that the TMF can indicate a first terminal to perform the target operation.

Step 715: (step 715 may be performed after step 703) The access network device queries for the target terminal (or obtains identification information of the target terminal) in response to the inventory request in step 703, and notifies the TMF of the first terminal found through querying (for example, a P-IoT Tag).

The first terminal is any terminal in the target terminal.

In an implementation, the access network device sends radio frequency information to target terminals within a coverage area of the access network device, to provide excitation signals for the target terminals within the coverage area of the access network device, so that the target terminals send signals to the access network device. In addition, the access network device performs a selection operation on the target terminals within the coverage area, and may select one or more target terminals by using the selection operation. Further, the access network device may send a query command to the one or more selected target terminals. After receiving the query command, the one or more selected target terminals initiate a random access process, where one terminal successfully performs random access, and the terminal may be considered as the first terminal in this embodiment. The first terminal sends a response message (for example, a registration request) to the access network device, where the response message includes an identifier of the first terminal. A specific random access process may be as follows: The access network device includes a first random number in the query command, and the selected one or more terminals locally set a second random number based on the first random number. If a second random number set by a terminal is 0, the terminal sends a third random number to the access network device. If the access network device can correctly receive the third random number, the access network device sends the third random number to the terminal. When receiving the third random number, the terminal determines that random access succeeds, and the terminal is considered as the first terminal in this embodiment.

The following process of step 716a to step 725 is performed for each terminal in the target terminal.

Step 716a: The first terminal sends a registration request to the access network device. Correspondingly, the access network device receives the registration request from the first terminal.

The registration request includes the identifier of the first terminal.

Step 716b: The access network device sends the registration request to the AMF. Correspondingly, the AMF receives the registration request from the access network device.

Further, optionally, the access network device may send one or more of the following to the AMF: the identifier (or a cell identifier) of the access network device or the first identifier (the first identifier identifies the inventory request in step 701).

Step 717: The AMF sends the registration request to the TMF. Correspondingly, the TMF receives the registration request from the AMF.

The registration request may include the identifier of the first terminal. Further, optionally, the AMF may send one or more of the following to the TMF: the identifier (or a cell identifier) of the access network device or the first identifier (the first identifier identifies the inventory request in step 701).

The TMF may determine, based on the identifier of the access network device, an access network device that the registration request is from.

The TMF may determine, based on the first identifier, that the registration request is related to the inventory request in step 701.

Optionally, step 718: The TMF initiates bidirectional authentication between the first terminal and the AAA authentication server.

The authentication may be performed in an existing manner, and this is not limited in this application. In an authentication process, the AAA server may provide the first terminal with a key used for data encryption, and the first terminal may encrypt, by using the key, data in the execution result of performing the operation.

Step 719: The TMF sends a registration accept to the AMF. Correspondingly, the AMF receives the registration accept from the TMF.

For the registration accept, refer to the indication information in step 604. For example, the registration accept indicates the first terminal to perform the target operation.

Optionally, the registration accept may include target operation information corresponding to the first terminal. Further, optionally, the registration accept includes an operation parameter corresponding to the target operation. The target operation may include one or more of a read operation, a write operation, a deletion operation, an encryption operation, an access operation, a block write operation, a block erase operation, or a kill operation.

In an optional example, when the registration accept does not include the target operation information, it indicates that the registration accept is for obtaining the identifier of the first terminal.

The TMF may determine the target operation corresponding to the first terminal based on the identifier of the first terminal in step 717 and the target operation corresponding to each terminal in the target terminal in the inventory request in step 701.

It may be understood that the TMF knows that the registration accept is related to the inventory request in step 701.

Step 720: The AMF sends the registration accept to the first terminal. Correspondingly, the first terminal receives the registration accept from the AMF.

For the registration accept, refer to the indication information in step 604. For example, the registration accept indicates the first terminal to perform the target operation.

Optionally, the registration accept may include the target operation information. Further, optionally, the registration accept includes the operation parameter corresponding to the target operation. The target operation may include one or more of a read operation, a write operation, a deletion operation, an encryption operation, an access operation, a block write operation, a block erase operation, or a kill operation.

In an optional example, when the registration accept does not include the target operation information, it indicates that the registration accept is for obtaining the identifier of the first terminal.

The AMF may send the registration accept to the first terminal via the access network device.

Step 721a: The first terminal sends the execution result to the access network device. Correspondingly, the access network device receives the execution result from the first terminal.

The execution result is an execution result of performing the target operation by the first terminal. The execution result includes the identifier of the first terminal. Further, optionally, the execution result includes at least one of the following: information about the target operation and data generated by performing the target operation by the first terminal. The data may be encrypted, for example, encrypted by using the key obtained in step 718. It is clear that, the data may alternatively be encrypted by using another key.

Step 721b: The access network device sends the execution result to the UPF through the user plane tunnel established between the access network device and the UPF. Correspondingly, the UPF receives the execution result based on the user plane tunnel established between the access network device and the UPF.

Step 721c: The UPF sends the execution result to the first address (namely, an AS) based on an AS tunnel.

Step 722: The UPF sends a report (report) to the SMF. Correspondingly, the SMF receives the report from the UPF.

For the report, refer to the second information in step 606. For example, the report indicates that the UPF receives the execution result of performing the target operation by the first terminal.

For example, the report includes the identifier of the first terminal. Further, optionally, the report includes the information about the target operation.

The UPF may send the report to the SMF according to the policy rule.

The policy rule indicates the user plane network element to send an identifier of any terminal after receiving an execution result of performing any operation in the target operation by the any terminal in the target terminal. The policy rule includes the target terminal information and indication information for reporting the identifier of the any terminal after the execution result of the any terminal in the target terminal is received.

The UPF may determine, based on the identifier of the first terminal, that the first terminal is a target terminal in the inventory request in step 701, and trigger, according to the policy rule formulated for the inventory request in step 701, determining to send the report to the SMF.

A sequence of step 721c and step 722 is not limited.

Step 723: The SMF sends the report to the TMF. Correspondingly, the TMF receives the report from the SMF.

For the report, refer to the second information in step 606. For example, the report indicates that the UPF receives the execution result of performing the target operation by the first terminal.

For example, the report includes the identifier of the first terminal. Further, optionally, the report includes the information about the target operation.

The SMF may send the report to the TMF based on the association established in step 710.

Step 724: The TMF sends third information to the AMF. Correspondingly, the AMF receives the third information from the TMF.

For the third information, refer to the third information in step 607. The third information indicates to query for another terminal that is not found through querying in the target terminal; or the third information indicates that the target operation corresponding to the first terminal is completed; or the third information indicates to obtain identification information of another terminal in the target terminal; or the third information indicates to perform a next random access procedure.

For example, the third information may include the identifier of the first terminal. Further, optionally, the third information may include an indication indicating that the target operation is completed.

The TMF may send the third information to the AMF when determining that execution of the target operation corresponding to the first terminal is completed (in other words, inventory of the first terminal is completed). The TMF may determine, based on the information about the target operation included in the report, that the execution of the target operation corresponding to the first terminal is completed, or the TMF may determine, based on the information about the operation delivered in step 719, that the execution of the target operation corresponding to the first terminal is completed. When determining that the execution of the target operation corresponding to the first terminal is not completed, the TMF may perform a process similar to step 719 to step 723 again until the execution of the target operation corresponding to the first terminal is completed.

Step 725: The AMF sends third information to the access network device. Correspondingly, the access network device receives the third information from the AMF.

Step 726: The access network device queries for another terminal in the target terminal in response to the third information.

It is assumed that the access network device finds a second terminal in the target terminal through querying. The access network device may notify the TMF of the second terminal found through querying. The TMF may indicate the second terminal to perform the target operation. This process is similar to step 715 to step 725.

A process similar to step 716 to step 726 is repeatedly performed until all target terminals within the coverage area of the access network device have completed the target operation.

Further, optionally, step 727: The access network device sends an inventory complete indication to the AMF. Correspondingly, the AMF receives the inventory complete indication from the access network device. The inventory complete indication indicates that all the target terminals within the coverage area of the access network device have completed the target operation.

Further, optionally, step 728: The AMF sends the inventory complete indication to the TMF. Correspondingly, the TMF receives the inventory complete indication from the AMF.

A third-party application sends an inventory request to the TMF, the TMF performs the target operation on the target terminal, and an execution result of any terminal is sent to the third-party application through a user plane tunnel established between a RAN and the UPF. The TMF configures the policy rule in the UPF to obtain an event corresponding to the execution result sent by the any terminal. After obtaining the execution result of the any terminal according to the policy rule, the UPF notifies the TMF of the execution result. When determining that inventory of a single terminal is completed, the TMF indicates the access network device to perform inventory of a next terminal.

It may be understood that if the TMF is integrated into the NEF, interaction between another network element and the TMF may be considered as interaction between the another network element and the NEF. For example, when the communication procedure shown in FIG. 7A and FIG. 7B is performed based on the communication system architecture shown in FIG. 3, the AF first interacts with the NEF, and then the NEF interacts with the TMF.

For ease of understanding of embodiments of this application, the following describes terminal management with reference to the communication system architecture shown in FIG. 2.

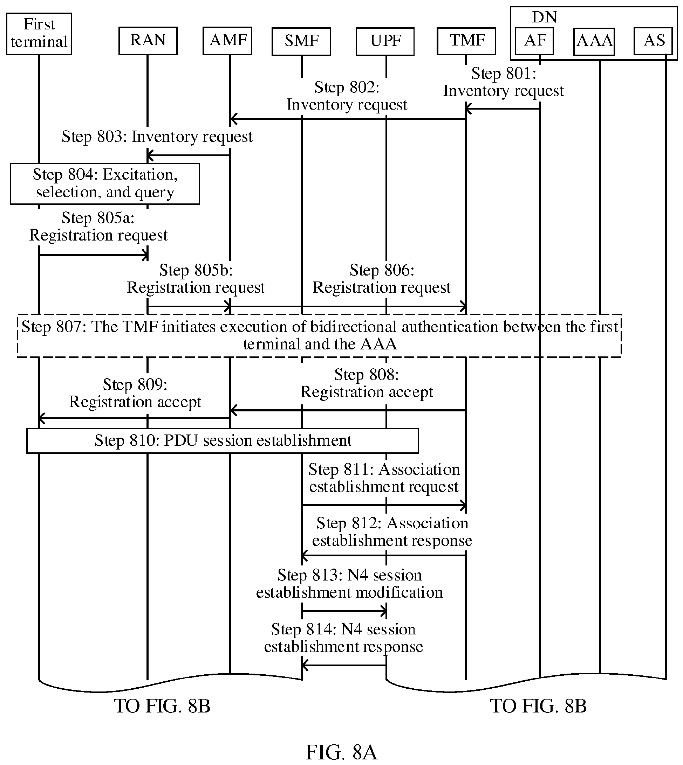

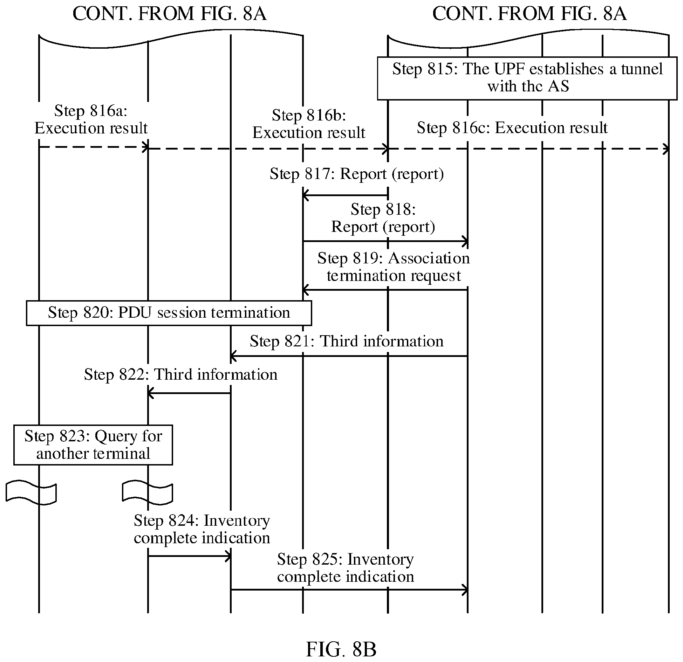

FIG. 8A and FIG. 8B are a schematic flowchart of a communication method according to this application. A difference from FIG. 7A and FIG. 7B includes the following: In FIG. 7A and FIG. 7B, a user plane tunnel is at an access network device granularity, and execution results of terminals within coverage of an access network device are transmitted based on a same user plane tunnel; and in FIG. 8A and FIG. 8B, a user plane tunnel is at a terminal granularity, and execution results of terminals within coverage of an access network device are transmitted through different user plane tunnels. The method includes the following steps.

For a specific process of the following step 801 to step 803, refer to step 701 to step 703. Details are not described again.

Step 801: An AF sends an inventory request to a TMF. Correspondingly, the TMF receives the inventory request from the AF.

Step 802: The TMF sends the inventory request to an AMF. Correspondingly, the AMF receives the inventory request from the TMF.

Step 803: The AMF sends the inventory request to the access network device (for example, a RAN). Correspondingly, the access network device receives the inventory request from the AMF.

For a specific process of the following step 804 to step 809, refer to step 715 to step 720. Details are not described again.

Step 804: The access network device queries for the target terminal (or obtains identification information of the target terminal) in response to the inventory request in step 803, and notifies the TMF of a first terminal found through querying (for example, a P-IoT Tag).

The following process of step 805a to step 822 is performed for each terminal in the target terminal.

Step 805a: The first terminal sends a registration request to the access network device. Correspondingly, the access network device receives the registration request from the first terminal.

Step 805b: The access network device sends the registration request to the AMF. Correspondingly, the AMF receives the registration request from the access network device.

Step 806: The AMF sends the registration request to the TMF. Correspondingly, the TMF receives the registration request from the AMF.

It should be noted that, a difference between step 806 and step 717 includes the following: An association between an SMF and the TMF is not established herein, and therefore, the TMF does not need to determine that the registration request is related to the inventory request in step 701.

Optionally, step 807: The TMF initiates bidirectional authentication between the first terminal and an AAA authentication server.

Step 808: The TMF sends a registration accept to the AMF. Correspondingly, the AMF receives the registration accept from the TMF.

It should be noted that, a difference between step 808 and step 719 includes the following: An association between an SMF and the TMF is not established herein, and therefore, the TMF does not need to determine that the registration accept is related to the inventory request in step 701.

Step 809: The AMF sends the registration accept to the first terminal. Correspondingly, the first terminal receives the registration accept from the AMF.

Step 810: The terminal initiates a PDU session establishment procedure.

The procedure may be implemented based on the conventional technology, or reference may be made to step 704 to step 709. In this process, the access network device may send AN tunnel information to the AMF (refer to step 704), and the AMF further sends the AN tunnel information to the SMF (refer to step 705). An N4 session is established between the SMF and a UPF. The SMF sends the AN tunnel information to the UPF, and the UPF sends CN tunnel information to the SMF (refer to step 706 and step 707).

Further, optionally, the access network device sends an identifier of the access network device and/or a first identifier to the AMF (refer to step 704). Further, optionally, the AMF sends the identifier of the access network device and/or the first identifier to the SMF (refer to step 705).

For a specific process of the following step 811 to step 815, refer to step 710 to step 714. Details are not described again.

Step 811: The SMF sends an association establishment request to the TMF. Correspondingly, the TMF receives the association establishment request from the SMF.

Step 812: The TMF sends an association establishment response to the SMF. Correspondingly, the SMF receives the association establishment response from the TMF.

Step 813: The SMF sends an N4 session establishment modification to the UPF. Correspondingly, the UPF receives the N4 session establishment modification from the SMF.

Step 814: The UPF sends the N4 session establishment response to the SMF. Correspondingly, the SMF receives the N4 session establishment response from the UPF.

Step 815: The UPF establishes a user plane tunnel with an AS, to transmit an execution result.

After step 810, the first terminal may report an execution result of performing the target operation. For a specific process of the following step 816a to step 818, refer to step 721a to step 723. Details are not described again.

A difference from step 721 lies in that a user plane tunnel is established for each terminal.

Step 816a: The first terminal sends the execution result to the access network device. Correspondingly, the access network device receives the execution result from the first terminal.

Step 816b: The access network device sends the execution result to the UPF through a user plane tunnel established between the access network device and the UPF. Correspondingly, the UPF receives the execution result based on the user plane tunnel established between the access network device and the UPF.

It should be noted that, a difference between step 816b and step 721b includes the following: The user plane tunnel in step 816b is at a terminal granularity, and the user plane tunnel in step 721b is at an access network device granularity.

Step 816c: The UPF sends the execution result to a first address (namely, the AS) based on an AS tunnel.

Step 817: The UPF sends a report to the SMF. Correspondingly, the SMF receives the report from the UPF.

Step 818: The SMF sends the report to the TMF. Correspondingly, the TMF receives the report from the SMF.

Step 819: The TMF sends an association termination request to the SMF. Correspondingly, the SMF receives the association termination request from the TMF.

The TMF may send the association termination request to the SMF when determining that execution of the target operation corresponding to the first terminal is completed (in other words, inventory of the first terminal is completed). The TMF may determine, based on information about the target operation included in the report, that the execution of the target operation corresponding to the first terminal is completed, or the TMF may determine, based on the information about the operation delivered in step 818, that the execution of the target operation corresponding to the first terminal is completed. When determining that the execution of the target operation corresponding to the first terminal is not completed, the TMF may perform a process similar to step 808, step 809, and step 816 to step 818 again until the execution of the target operation corresponding to the first terminal is completed.

Step 820: The SMF initiates a PDU session termination procedure.

For a specific process of the following step 821 to step 825, refer to step 724 to step 728. Details are not described again.

Step 821: The TMF sends third information to the AMF. Correspondingly, the AMF receives the third information from the TMF.

The TMF may send the third information to the AMF when determining that execution of the target operation corresponding to the first terminal is completed (in other words, inventory of the first terminal is completed). The TMF may determine, based on information about the target operation included in the report, that the execution of the target operation corresponding to the first terminal is completed, or the TMF may determine, based on the information about the operation delivered in step 719, that the execution of the target operation corresponding to the first terminal is completed. When determining that the execution of the target operation corresponding to the first terminal is not completed, the TMF may perform a process similar to step 808, step 809, and step 816 to step 818 again until the execution of the target operation corresponding to the first terminal is completed.

A sequence of step 821 and step 819 is not limited.

Step 822: The AMF sends the third information to the access network device. Correspondingly, the access network device receives the third information from the AMF.

Step 823: The access network device queries for another terminal in the target terminal in response to the third information.

It is assumed that the access network device finds a second terminal in the target terminal through querying. The access network device may notify the TMF of the second terminal found through querying. The TMF may indicate the second terminal to perform the target operation. This process is similar to step 805 to step 822.

A process similar to step 805 to step 823 is repeatedly performed until all target terminals within the coverage area of the access network device have completed the target operation.

Further, optionally, step 824 (reference may be made to step 727): The access network device sends an inventory complete indication to the AMF. Correspondingly, the AMF receives the inventory complete indication from the access network device. The inventory complete indication indicates that all the target terminals within the coverage area of the access network device have completed the target operation.

Further, optionally, step 825 (reference may be made to step 728): The AMF sends the inventory complete indication to the TMF. Correspondingly, the TMF receives the inventory complete indication from the AMF.

A third-party application sends an inventory request to the TMF, the TMF performs the target operation on the target terminal, and an execution result of any terminal is sent to the third-party application through a user plane tunnel established between UE and the UPF. The TMF configures a policy rule in the UPF to obtain an event corresponding to the execution result sent by the any terminal. After obtaining the execution result of the any terminal according to the policy rule, the UPF notifies the TMF of the execution result. When determining that inventory of a single terminal is completed, the TMF indicates the access network device to perform inventory of a next terminal.

It may be understood that if the TMF is integrated into the NEF, interaction between another network element and the TMF may be considered as interaction between the another network element and the NEF. For example, when the communication procedure shown in FIG. 8A and FIG. 8B is performed based on the communication system architecture shown in FIG. 3, the AF first interacts with the NEF, and then the NEF interacts with the TMF.

For ease of understanding of embodiments of this application, the following describes terminal management with reference to the communication system architecture shown in FIG. 4.

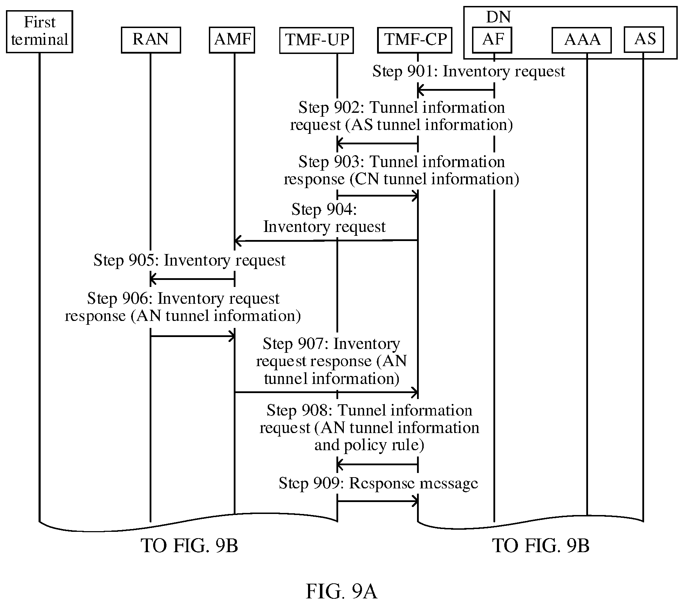

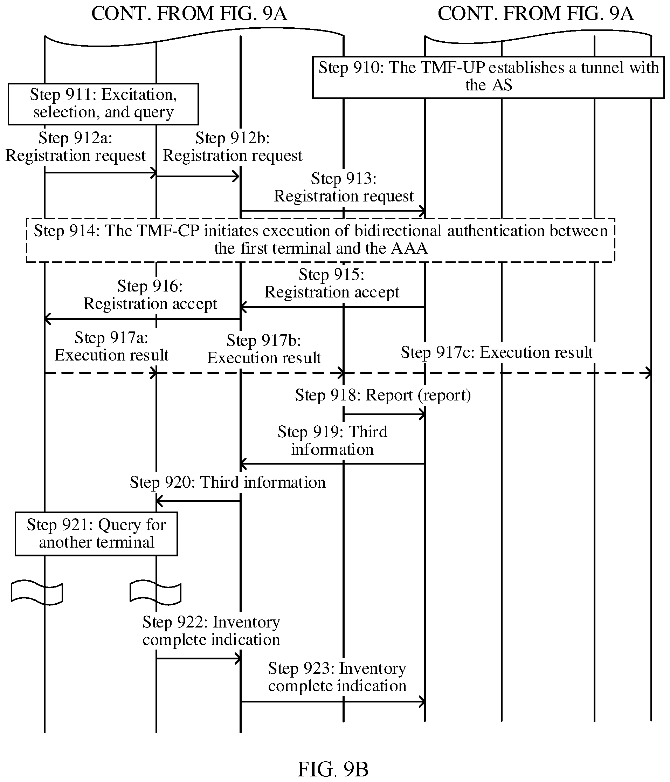

FIG. 9A and FIG. 9B are a schematic flowchart of a communication method according to this application. The method includes the following steps.

Step 901: An AF sends an inventory request to a TMF-CP. Correspondingly, the TMF-CP receives the inventory request from the AF.

The inventory request is for requesting to perform a target operation on a target terminal. For the inventory request, refer to the first request in step 601.

For example, the inventory request may include one or more of the following: target terminal information or an application identifier.

The target terminal information indicates the target terminal. For example, the target terminal information includes one or more of the following: indication information of the target terminal, an identifier value range of the target terminal, an identifier list of the target terminal, a group identifier of a target terminal group, identification information of a user to which the target terminal belongs, a type of the target terminal, or identification information of an application to which the target terminal belongs. It should be understood that the target terminal information may be some features of identification information of the target terminal.

The application identifier identifies the AF network element that initiates the inventory request. The AF and the TMF-CP may agree in advance on target terminals on which the AF performs the operation. For the TMF-CP, even if the inventory request does not include the target terminal information, the TMF-CP may determine the target terminal based on the application identifier.

Optionally, the inventory request further includes target operation information, and the target operation may be an operation of obtaining an identifier of a target terminal (which may also be referred to as an inventory operation, a stocktaking operation, or Inventory), a read operation, a write operation, a deletion operation, an encryption operation, an access operation, a block write operation, a block erase operation, or a kill operation. Further, optionally, the inventory request may include an operation parameter corresponding to the target operation. For example, an operation parameter corresponding to a read operation may include a read memory bank, a start byte address of the read memory bank, a quantity of bytes of the read memory bank, and the like. An operation parameter corresponding to a write operation may include a write memory bank, a start byte of the read memory bank, and written data. For the write operation, same information may be written for all terminals in the target terminal, in other words, the inventory request may include same written information for different terminals; or different information may be separately written for different terminals, in other words, the inventory request may include different written information for different terminals. An operation of obtaining an identifier of the target terminal (which may also be referred to as an inventory operation, a stocktaking operation, or Inventory) may not need to be carried in the inventory request. For example, when the inventory request does not include the target operation, it indicates that the inventory request is for obtaining the identifier of the target terminal. In an implementation, an operation in which the TMF obtains the identifier of the target terminal may be indicated in an explicit manner. For example, the inventory request may include information about the operation of obtaining the identifier of the target terminal. Alternatively, the operation of obtaining the identifier of the target terminal may be indicated in an implicit manner. For example, the inventory request may not include information about any operation, and in this case, the target operation indicated by the inventory request is the operation of obtaining the identifier of the target terminal.

Optionally, the inventory request may further include target area information A, and the target area information A indicates an area corresponding to the target terminal. For example, the target area information A may be a geographical location, a municipal location, or 3GPP location information (for example, a tracking area (tracking area, TA) list or a cell list) corresponding to the target terminal.

The TMF-CP may determine an access network device based on one or more of the following information: the target terminal information, the application identifier, the target area information A, or the like.

Optionally, the inventory request may further include a first address. For example, the first address is an address used by the AF network element to receive the execution result of performing the target operation by the target terminal, and may also be referred to as AS tunnel information. The first address may be notified to a TMF-UP.

Optionally, the inventory request may further include an address of an AAA server that performs authentication, and the TMF-CP may initiate bidirectional authentication between the terminal and the AAA server. In this process, the terminal may obtain a key used for data encryption, and the terminal may encrypt, by using the key, data in the execution result of performing the operation.

Optionally, the inventory request may further include a first identifier, and the first identifier identifies the inventory request.

Step 902: The TMF-CP sends a tunnel information request to the TMF-UP. Correspondingly, the TMF-UP receives the tunnel information request from the TMF-CP.

Optionally, the tunnel information request includes the AS tunnel information.

Step 903: The TMF-UP sends a tunnel information response to the TMF-CP. Correspondingly, the TMF-CP receives the tunnel information response from the TMF-UP.

The tunnel information response includes CN tunnel information. The CN tunnel information is a user plane endpoint at which the TMF-UP receives uplink data.

Step 904: The TMF-CP sends the inventory request to the AMF. Correspondingly, the AMF receives the inventory request from the TMF-CP.

The inventory request is for requesting to perform the target operation on the target terminal.

For example, the inventory request includes the target terminal information.

Further, optionally, the inventory request includes one or more of the following: the application identifier, target area information B, the address of the AAA server that performs authentication, a tunnel establishment indication, the first identifier, or the CN tunnel information.

For the application identifier, the address of the AAA server that performs authentication, and the first identifier, refer to the foregoing descriptions. Details are not described again.

The target area information B indicates an area corresponding to the target terminal. For example, the target area information B may be 3GPP location information (for example, a tracking area (tracking area, TA) list or a cell list). It should be noted that, if the target area information A provided by the AF is a geographical location, a municipal location, or the like, the TMF may map the geographical location and the municipal location to 3GPP location information. If the target area information B is managed by different AMFs, the TMF may send an inventory request to each AMF. For different AMF network elements, inventory requests may include different target area information.

The TMF-CP may determine the AMF based on one or more of the following information: the target terminal information, the application identifier, the target area information A, or the like.

Step 905: The AMF sends the inventory request to the access network device (for example, a RAN). Correspondingly, the access network device receives the inventory request from the AMF.

The inventory request is for requesting to perform the target operation on the target terminal, or the inventory request indicates to query for the target terminal, or the inventory request indicates to obtain an identifier of the target terminal.

For example, the inventory request may include target terminal information. Further, optionally, the inventory request includes at least one of the following: the first identifier, the CN tunnel information, and the tunnel establishment indication.

The AMF may send the inventory request to the access network device based on the target area information B. If the target area information B covers a plurality of access network devices, the AMF sends an inventory request to each access network device.

Step 906: The access network device sends the inventory request response to the AMF. Correspondingly, the AMF receives the inventory request response from the access network device.

The inventory request response includes one or more of the following: AN tunnel information or an identifier of the access network device. Further, optionally, the inventory request response includes the first identifier.

The AN tunnel information is a user plane endpoint at which the access network device receives downlink data.

The first identifier identifies the inventory request in step 901. The access network device may trigger allocation of the AN tunnel information based on a configuration, the CN tunnel information, or the tunnel establishment indication.

Step 907: The AMF sends an inventory request response to the TMF-CP. Correspondingly, the TMF-CP receives the inventory request response from the AMF.

The inventory request response includes at least one of the following: the AN tunnel information, the identifier of the access network device, and the first identifier.

Step 908: The TMF-CP sends a tunnel information request to the TMF-UP. Correspondingly, the TMF-UP receives the tunnel information request sent by the TMF-CP.

The tunnel information request includes the AN tunnel information and information about a policy rule formulated for the inventory request in step 901, and the information about the policy rule indicates the policy rule. The policy rule may be used for detecting whether to report an identifier of a terminal. For example, the policy rule indicates the user plane network element to send an identifier of any terminal after receiving an execution result of performing any operation in the target operation by the any terminal in the target terminal. The policy rule includes the target terminal information and indication information for reporting the identifier of the any terminal after the execution result of the any terminal in the target terminal is received.

Further, optionally, the tunnel information request includes the first identifier.

Step 909: The TMF-UP sends a response message to the TMF-CP.

Step 910: The TMF-UP establishes a user plane tunnel with the AS, to transmit the execution result.

A sequence of step 909 and step 910 is not limited.

After step 905, the access network device may query for the target terminal, and notify the TMF-CP of a terminal found through querying, so that the TMF-CP can indicate a first terminal to perform the target operation.

Step 911: (step 911 may be performed after step 905) The access network device queries for the target terminal (or obtains identification information of the target terminal) in response to the inventory request in step 905, and notifies the TMF-CP of the first terminal found through querying (for example, P-IoT Tag).

The first terminal is any terminal in the target terminal.

In an implementation, the access network device sends radio frequency information to target terminals within a coverage area of the access network device, to provide excitation signals for the target terminals within the coverage area of the access network device, so that the target terminals send signals to the access network device. In addition, the access network device performs a selection operation on the target terminals within the coverage area, and may select one or more target terminals by using the selection operation. Further, the access network device may send a query command to the one or more selected target terminals. After receiving the query command, the one or more selected target terminals initiate a random access process, where one terminal successfully performs random access, and the terminal may be considered as the first terminal in this embodiment. The first terminal sends a response message (for example, a registration request) to the access network device, where the response message includes an identifier of the first terminal. A specific random access process may be as follows: The access network device includes a first random number in the query command, and the selected one or more terminals locally set a second random number based on the first random number. If a second random number set by a terminal is 0, the terminal sends a third random number to the access network device. If the access network device can correctly receive the third random number, the access network device sends the third random number to the terminal. When receiving the third random number, the terminal determines that random access succeeds, and the terminal is considered as the first terminal in this embodiment.

The following process of step 912a to step 920 is performed for each terminal in the target terminal.

Step 912a: The first terminal sends a registration request to the access network device. Correspondingly, the access network device receives the registration request from the first terminal.

The registration request includes the identifier of the first terminal.

Step 912b: The access network device sends the registration request to the AMF. Correspondingly, the AMF receives the registration request from the access network device.

Further, optionally, the access network device may send one or more of the following to the AMF: the identifier (or a cell identifier) of the access network device or the first identifier (the first identifier identifies the inventory request in step 901).

Step 913: The AMF sends the registration request to the TMF-CP. Correspondingly, the TMF-CP receives the registration request from the AMF.

The registration request may include the identifier of the first terminal. Further, optionally, the AMF may send one or more of the following to the TMF-CP: the identifier (or a cell identifier) of the access network device or the first identifier (the first identifier identifies the inventory request in step 901).

The TMF-CP may determine, based on the identifier of the access network device, an access network device that the registration request is from.

The TMF-CP may determine, based on the first identifier, that the registration request is related to the inventory request in step 901.

Optionally, step 914: The TMF-CP initiates bidirectional authentication between the first terminal and the AAA authentication server.

The authentication may be performed in an existing manner, and this is not limited in this application. In an authentication process, the AAA server may provide the first terminal with a key used for data encryption, and the first terminal may encrypt, by using the key, data in the execution result of performing the operation.

Step 915: The TMF-CP sends a registration accept to the AMF. Correspondingly, the AMF receives the registration accept from the TMF-CP.

For the registration accept, refer to the indication information in step 604. For example, the registration accept indicates the first terminal to perform the target operation.

Optionally, the registration accept may include target operation information corresponding to the first terminal. Further, optionally, the registration accept includes the operation parameter corresponding to the target operation. The target operation may include one or more of a read operation, a write operation, a deletion operation, an encryption operation, an access operation, a block write operation, a block erase operation, or a kill operation.

In an optional example, when the registration accept does not include the target operation information, it indicates that the registration accept is for obtaining the identifier of the first terminal.

The TMF-CP may determine the target operation corresponding to the first terminal based on the identifier of the first terminal in step 913 and the target operation corresponding to each terminal in the target terminal in the inventory request in step 901.

It may be understood that the TMF-CP knows that the registration accept is related to the inventory request in step 901.

Step 916: The AMF sends the registration accept to the first terminal. Correspondingly, the first terminal receives the registration accept from the AMF.

For the registration accept, refer to the indication information in step 604. For example, the registration accept indicates the first terminal to perform the target operation.

Optionally, the registration accept may include the target operation information. Further, optionally, the registration accept includes the operation parameter corresponding to the target operation. The target operation may include one or more of a read operation, a write operation, a deletion operation, an encryption operation, an access operation, a block write operation, a block erase operation, or a kill operation.

In an optional example, when the registration accept does not include the target operation information, it indicates that the registration accept is for obtaining the identifier of the first terminal.

The AMF may send the registration accept to the first terminal via the access network device.

Step 917a: The first terminal sends the execution result to the access network device. Correspondingly, the access network device receives the execution result from the first terminal.

The execution result is an execution result of performing the target operation by the first terminal. The execution result includes the identifier of the first terminal. Further, optionally, the execution result includes at least one of the following: information about the target operation and data generated by performing the target operation by the first terminal. The data may be encrypted, for example, encrypted by using the key obtained in step 914. It is clear that, the data may alternatively be encrypted by using another key.

Step 917b: The access network device sends the execution result to the TMF-UP through the user plane tunnel established between the access network device and the TMF-UP. Correspondingly, the TMF-UP receives the execution result based on the user plane tunnel established between the access network device and the TMF-UP.

Step 917c: The TMF-UP sends the execution result to the first address (namely, an AS) based on an AS tunnel.

Step 918: The TMF-UP sends the report to the TMF-CP. Correspondingly, the TMF-CP receives the report from the TMF-UP.

For the report, refer to the second information in step 606. For example, the report indicates that the TMF-UP receives the execution result of performing the target operation by the first terminal.

For example, the report includes the identifier of the first terminal. Further, optionally, the report includes the information about the target operation.

The TMF-UP may send the report to the TMF-CP according to the policy rule.

The policy rule indicates the user plane network element to send an identifier of any terminal after receiving an execution result of performing any operation in the target operation by the any terminal in the target terminal. The policy rule includes the target terminal information and indication information for reporting the identifier of the any terminal after the execution result of the any terminal in the target terminal is received.

The TMF-UP may determine, based on the identifier of the first terminal, that the first terminal is a target terminal in the inventory request in step 901, and trigger, according to the policy rule formulated for the inventory request in step 901, determining to send the report to the SMF.

A sequence of step 917c and step 918 is not limited.

Step 919: The TMF-CP sends third information to the AMF. Correspondingly, the AMF receives the third information from the TMF-CP.

For the third information, refer to the third information in step 607. The third information indicates to query for another terminal that is not found through querying in the target terminal; or the third information indicates that the target operation corresponding to the first terminal is completed; or the third information indicates to obtain identification information of another terminal in the target terminal; or the third information indicates to perform a next random access procedure.

For example, the third information may include the identifier of the first terminal. Further, optionally, the third information may include an indication indicating that the target operation is completed.

The TMF-CP may send the third information to the AMF when determining that execution of the target operation corresponding to the first terminal is completed (in other words, inventory of the first terminal is completed). The TMF-CP may determine, based on the information about the target operation included in the report, that the execution of the target operation corresponding to the first terminal is completed, or the TMF-CP may determine, based on the information about the operation delivered in step 915, that the execution of the target operation corresponding to the first terminal is completed. When determining that the execution of the target operation corresponding to the first terminal is not completed, the TMF-CP may perform a process similar to step 915 to step 918 again until the execution of the target operation corresponding to the first terminal is completed.

Step 920: The AMF sends third information to the access network device. Correspondingly, the access network device receives the third information from the AMF.

Step 921: The access network device queries for another terminal in the target terminal in response to the third information.

It is assumed that the access network device finds a second terminal in the target terminal through querying. The access network device may notify the TMF-CP of the second terminal found through querying. The TMF-CP may indicate the second terminal to perform the target operation. This process is similar to step 911 to step 920.

A process similar to step 912 to step 921 is repeatedly performed until all target terminals within the coverage area of the access network device have completed the target operation.

Further, optionally, step 922: The access network device sends an inventory complete indication to the AMF. Correspondingly, the AMF receives the inventory complete indication from the access network device. The inventory complete indication indicates that all the target terminals within the coverage area of the access network device complete the target operation.

Further, optionally, step 923: The AMF sends the inventory complete indication to the TMF-CP. Correspondingly, the TMF-CP receives the inventory complete indication from the AMF.

A third-party application sends an inventory request to the TMF-CP, the TMF-CP performs the target operation on the target terminal, and an execution result of any terminal is sent to the third-party application through a user plane tunnel established between a RAN and the TMF-UP. The TMF-CP configures the policy rule in the TMF-UP to obtain an event corresponding to the execution result sent by the any terminal. After obtaining the execution result of the any terminal according to the policy rule, the TMF-UP notifies the TMF-CP of the execution result. When determining that inventory of a single terminal is completed, the TMF-CP indicates the access network device to perform inventory of a next terminal.

It may be understood that if the TMF-CP is integrated into the NEF, interaction between another network element and the TMF-CP may be considered as interaction between the another network element and the NEF. For example, when the communication procedure shown in FIG. 9A and FIG. 9B is performed based on the communication system architecture shown in FIG. 6, the AF first interacts with the NEF, and then the NEF interacts with the TMF-CP.

The foregoing describes the method in embodiments of this application, and the following describes an apparatus in embodiments of this application. The method and the apparatus are based on a same technical idea. The method and the apparatus have similar principles for resolving problems. Therefore, for implementations of the apparatus and the method, refer to each other. Details are not repeated herein.

In embodiments of this application, the apparatus may be divided into functional modules based on the foregoing method examples. For example, the apparatus may be divided into functional modules corresponding to functions, or two or more functions may be integrated into one module. These modules may be implemented in a form of hardware, or may be implemented in a form of a software functional module. It should be noted that, in embodiments of this application, module division is an example, and is merely a logical function division. In a specific implementation, another division manner may be used.

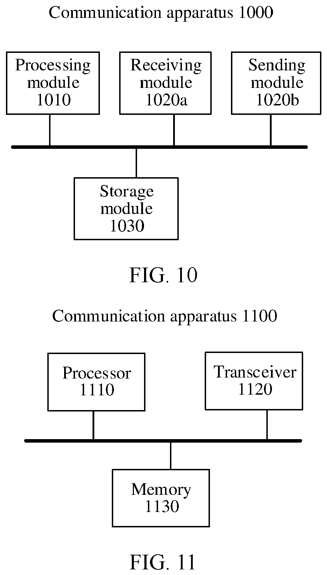

Based on the same technical idea as the foregoing method, FIG. 10 provides a diagram of a structure of a communication apparatus 1000. The communication apparatus 1000 may include at least one of the following: a processing module 1010, a receiving module 1020a, a sending module 1020b, and a storage module 1030. The processing module 1010 may be separately connected to the storage module 1030, the receiving module 1020a, and the sending module 1020b. The storage module 1030 may also be connected to the receiving module 1020a and the sending module 1020b.

In an example, the receiving module 1020a and the sending module 1020b may alternatively be integrated together, and are defined as a transceiver module.

In an example, the communication apparatus 1000 may be a terminal management function network element, or may be a chip or a functional unit used in a terminal management function network element. The communication apparatus 1000 has any function of the terminal management function network element in the foregoing method. For example, the communication apparatus 1000 can perform the steps performed by the terminal management function network element in the methods in FIG. 6 to FIG. 9B.

The receiving module 1020a may perform a receiving action performed by the terminal management function network element in the foregoing method embodiment.

The sending module 1020b may perform a sending action performed by the terminal management function network element in the foregoing method embodiment.

The processing module 1010 may perform an action other than the sending action and the receiving action in the actions performed by the terminal management function network element in the foregoing method embodiment.

In an example, the receiving module 1020a is configured to receive a first request for performing a target operation on a target terminal, where the target terminal includes a plurality of terminals, and the target operation includes one or more operations; the sending module 1020b is configured to: send first information to an access network device, where the first information indicates to query for the target terminal; and send at least one piece of indication information to a first terminal found through querying by the access network device, where the indication information indicates at least one operation in the target operation, the first terminal belongs to the target terminal, and an execution result of performing, by the first terminal, any one of the operation indicated by the indication information is sent by the first terminal to a user plane network element; and when determining that at least one piece of second information from the user plane network element is received, the sending module 1020b is further configured to send third information to the access network device, where the third information indicates to query for another terminal that is not found through querying in the target terminal, and the second information indicates that the user plane network element receives, from the first terminal, the execution result of performing the operation indicated by any one of the indication information.

In an example, the second information includes the identifier of the first terminal.

In an example, the second information corresponding to the indication information further includes information about the operation indicated by the indication information; and the processing module 1010 is configured to determine that an operation corresponding to the information about the operation included in the at least one piece of second information is the same as a target operation corresponding to the first terminal.

In an example, the at least one piece of indication information includes first indication information and second indication information; the sending module 1020b is specifically configured to send the first indication information to the first terminal; the processing module 1010 is specifically configured to: when receiving second information corresponding to the first indication information, and determining, based on a mapping relationship between the identifier of the first terminal and a performed operation, that the first terminal has completed the target operation, send the second indication information to the first terminal; and the processing module 1010 is specifically configured to: when receiving second information corresponding to the second indication information, and determining that the first terminal has completed the target operation, send the third information to the access network device.

In an example, the sending module 1020b is further configured to send a policy rule to the user plane network element, where the second information is sent by the user plane network element according to the policy rule, and the policy rule indicates the user plane network element to send the second information after receiving an execution result of performing any operation in the target operation by any terminal in the target terminal.

In an example, the receiving module 1020a is configured to receive a second request from a session management network element, where the second request is for requesting to establish an association between the session management network element and the terminal management function network element for the first request; the processing module 1010 is further configured to establish the association between the terminal management function network element and the session management network element for the first request; and the sending module 1020b is specifically configured to indicate the policy rule to the user plane network element via the session management network element based on the association.

In an example, the receiving module 1020a is further configured to receive the second request from the session management network element, where the second request is for requesting to establish the association between the session management network element and the terminal management function network element for the first request; and the processing module 1010 is further configured to establish the association between the terminal management function network element and the session management network element for the first request; and the receiving module 1020a is specifically configured to receive the second information from the user plane network element via the session management network element based on the association.

In an example, the first information includes a first identifier, the first identifier identifies the first request, and the first identifier is generated by the terminal management function network element for the first request, or the first request includes the first identifier; the second request includes the first identifier, where in a process of establishing a user plane tunnel between the access network device and the user plane network element, the access network device sends the first identifier to the session management network element, and the user plane tunnel between the access network device and the user plane network element is for transmission of an execution result of performing any operation in the target operation by any terminal in the target terminal; and the processing module 1010 is specifically configured to establish the association between the terminal management function network element and the session management network element for the first identifier.

In an example, the first information includes the first identifier, the first identifier identifies the first request, and the first identifier is generated by the terminal management function network element for the first request, or the first request includes the first identifier; the receiving module 1020a is further configured to receive fourth information from the access network device, where the fourth information includes the identifier of the first terminal and the first identifier; and the processing module 1010 is further configured to determine, based on the first identifier, that the fourth information is related to the first request.

In an example, the storage module 1030 may store computer-executable instructions of the method performed by the terminal management function network element, so that the processing module 1010, the receiving module 1020a, and the sending module 1020b perform the method performed by the terminal management function network element in the foregoing examples.

For example, the storage module may include one or more memories. The memory may be one or more devices or components in a circuit that are used to store a program or data. The storage module may be a register, a cache, a RAM, or the like. The storage module may be integrated with the processing module. The storage module may be a ROM or another type of static storage device that can store static information and instructions. The storage module may be independent of the processing module.

The transceiver module may be an input/output interface, a pin, a circuit, or the like.

In an example, the communication apparatus 1000 may be a user plane network element, or may be a chip or a functional unit used in a user plane network element. The communication apparatus 1000 has any function of the user plane network element in the foregoing method. For example, the communication apparatus 1000 can perform the steps performed by the user plane network element in the methods in FIG. 6 to FIG. 9B.

The receiving module 1020a may perform a receiving action performed by the user plane network element in the foregoing method embodiment.

The sending module 1020b may perform a sending action performed by the user plane network element in the foregoing method embodiment.

The processing module 1010 may perform an action other than the sending action and the receiving action in the actions performed by the user plane network element in the foregoing method embodiment.

In an example, the receiving module 1020a is configured to receive an execution result, where the execution result is a result of performing at least one operation by a first terminal, the execution result includes an identifier of the first terminal, and the at least one operation is indicated by a terminal management function network element to the first terminal; and the sending module 1020b is configured to send second information to the terminal management function network element, where the second information indicates that the user plane network element receives the execution result, from the first terminal, of performing the at least one operation.

In an example, the execution result further includes one or more of the following: information about the at least one operation, or data generated by performing the at least one operation by the first terminal.

In an example, the receiving module 1020a is specifically configured to: receive the execution result based on a user plane tunnel between an access network device and the user plane network element, where terminals within coverage of the access network device correspond to a same user plane tunnel; or receive the execution result based on a user plane tunnel that is between an access network device and the user plane network element and that is established for the first terminal, where different terminals within coverage of the access network device correspond to different user plane tunnels.

In an example, the second information includes the identifier of the first terminal.

In an example, the second information further includes the information about the at least one operation.

In an example, the sending module 1020b is specifically configured to send the second information to the terminal management function network element according to a policy rule, where the policy rule indicates the user plane network element to send the second information after receiving an execution result of performing an operation by a terminal.

In an example, the receiving module 1020a is further configured to receive the policy rule from the terminal management function network element.

In an example, the storage module 1030 may store computer-executable instructions of the method performed by the user plane network element, so that the processing module 1010, the receiving module 1020a, and the sending module 1020b perform the method performed by the user plane network element in the foregoing examples.

For example, the storage module may include one or more memories. The memory may be one or more devices or components in a circuit that are used to store a program or data. The storage module may be a register, a cache, a RAM, or the like. The storage module may be integrated with the processing module. The storage module may be a ROM or another type of static storage device that can store static information and instructions. The storage module may be independent of the processing module.

The transceiver module may be an input/output interface, a pin, a circuit, or the like.

As a possible product form, the apparatus may be implemented by using a general bus architecture.

FIG. 11 provides a schematic block diagram of a communication apparatus 1100.

The communication apparatus 1100 may include at least one of the following: a processor 1110, a transceiver 1120, and a memory 1130. The transceiver 1120 may be configured to receive a program or instructions and transmit the program or instructions to the processor 1110. Alternatively, the transceiver 1120 may be configured to: perform communication interaction between the communication apparatus 1100 and another communication device, for example, exchange control signaling and/or service data. The transceiver 1120 may be a code and/or data read/write transceiver, or the transceiver 1120 may be a signal transmission transceiver between the processor and the transceiver. The processor 1110 and the memory 1130 are electrically coupled.

In an example, the communication apparatus 1100 may be a terminal management function network element, or may be a chip used in a terminal management function network element. It should be understood that the apparatus has any function of the terminal management function network element in the foregoing method. For example, the communication apparatus 1100 can perform the steps performed by the terminal management function network element in the methods in FIG. 6 to FIG. 9B. For example, the memory 1130 is configured to store a computer program or instructions. The processor 1110 may be configured to: invoke the computer program or instructions stored in the memory 1130, to perform the method performed by the terminal management function network element in the foregoing examples, or perform, by using the transceiver 1120, the method performed by the terminal management function network element in the foregoing examples.

In an example, the communication apparatus 1100 may be a user plane network element, or may be a chip used in a user plane network element. It should be understood that the apparatus has any function of the user plane network element in the foregoing method. For example, the communication apparatus 1100 can perform the steps performed by the user plane network element in the methods in FIG. 6 to FIG. 9B. For example, the memory 1130 is configured to store a computer program or instructions. The processor 1110 may be configured to: invoke the computer program or instructions stored in the memory 1130, to perform the method performed by the user plane network element in the foregoing examples, or perform, by using the transceiver 1120, the method performed by the user plane network element in the foregoing examples.

The processing module 1010 in FIG. 10 may be implemented by using the processor 1110.

The receiving module 1020a and the sending module 1020b in FIG. 10 may be implemented by using the transceiver 1120. Alternatively, the transceiver 1120 includes a receiver and a transmitter. The receiver performs a function of the receiving module, and the transmitter performs a function of the sending module.

The storage module 1030 in FIG. 10 may be implemented by using the memory 1130.

As a possible product form, the apparatus may be implemented by a general-purpose processor (the general-purpose processor may also be referred to as a chip or a chip system).

In a possible implementation, the general-purpose processor that implements the apparatus used in the terminal management function network element or the user plane network element includes: a processing circuit (also referred to as a processor); and optionally, further includes: an input/output interface and a storage medium (also referred to as a memory) that are connected to and communicate with the processing circuit internally. The storage medium is configured to: store instructions executed by the processing circuit, to perform the method executed by the terminal management function network element or the user plane network element in the foregoing examples.

The processing module 1010 in FIG. 10 may be implemented by using the processing circuit.

The receiving module 1020a and the sending module 1020b in FIG. 10 may be implemented by using an input/output interface. Alternatively, the input/output interface includes an input interface and an output interface. The input interface performs functions of the receiving module, and the output interface performs functions of the sending module.

The storage module 1030 in FIG. 10 may be implemented by using a storage medium.

As a possible product form, the apparatus in embodiments of this application may be further implemented by using the following: one or more FPGAs (field programmable gate arrays), a PLD (programmable logic device), a controller, a state machine, gate logic, a discrete hardware component, any other appropriate circuit, or any combination of circuits that can perform various functions described in this application.

An embodiment of this application further provides a computer-readable storage medium that stores a computer program. When the computer program is executed by a computer, the computer may be enabled to perform the foregoing communication method. In other words, the computer program includes instructions for implementing the foregoing communication method.

An embodiment of this application further provides a computer program product. The computer program product includes computer program code. When the computer program code is run on a computer, the computer is enabled to perform the foregoing communication method.

An embodiment of this application further provides a communication system. The communication system includes a terminal management function network element and a user plane network element that perform the foregoing communication method.

In addition, the processor mentioned in embodiments of this application may be a central processing unit (central processing unit, CPU) or a baseband processor. The baseband processor and the CPU may be integrated or separated, or may be a network processor (network processor, NP) or a combination of a CPU and an NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor or the like.

The memory mentioned in embodiments of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application aims to include but is not limited to these memories and any memory of another proper type.

The transceiver mentioned in embodiments of this application may include a separate transmitter and/or a separate receiver, or the transmitter and the receiver may be integrated. The transceiver may operate according to instructions of a corresponding processor. Optionally, the transmitter may correspond to a transmitter machine in a physical device, and the receiver may correspond to a receiver machine in the physical device.

A person of ordinary skill in the art may be aware that, the method steps and units described in embodiments disclosed in this specification may be implemented by electronic hardware, computer software, or a combination thereof. To clearly describe interchangeability between the hardware and the software, the foregoing has generally described the steps and compositions of each embodiment based on functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected according to actual requirements to achieve the objectives of the solutions of embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions in this application essentially, or the part contributing to the conventional technology, or all or some of the technical solutions may be represented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The term "and/or" in this application describes an association relationship for describing associated objects and represents that three relationships may exist. For example, A and/or B may represent the following three cases: Only A exists, both A and B exist, and only B exists. The character "/" generally indicates an "or" relationship between the associated objects. "A plurality of" in this application means two or more. In addition, it should be understood that, in descriptions of this application, terms such as "first" and "second" are merely used for distinguishing and description, but should not be understood as an indication or implication of relative importance, or an indication or implication of a sequence.

Although preferred embodiments of this application are described, a person skilled in the art can make changes and modifications to these embodiments after they learn of a basic inventive concept. Therefore, the following claims are intended to be construed as to cover the preferred embodiments and all changes and modifications falling within the scope of this application.

It is clear that, a person skilled in the art can make various modifications and variations to embodiments of this application without departing from the scope of the appended claims. In this way, this application is intended to cover these modifications and variations to embodiments of this application provided that they fall within the scope of protection defined by the following claims.

## Claims

1. A communication method, wherein the method is applied to a terminal management function network element, and the method comprises:
receiving (601) a first request for performing a target operation on a target terminal, wherein the target terminal comprises a plurality of terminals, and the target operation comprises one or more operations;
sending (602) first information to an access network device, wherein the first information indicates to query for the target terminal;
sending (604) at least one piece of indication information to a first terminal found through querying (603) by the access network device, wherein the indication information indicates at least one operation in the target operation, the first terminal belongs to the target terminal, and an execution result of performing, by the first terminal, an operation indicated by any one of the indication information is sent by the first terminal to a user plane network element; and
when determining that at least one piece of second information from the user plane network element is received (606), sending (607) third information to the access network device, wherein the third information indicates to query for another terminal that is not found through querying in the target terminal, and the second information indicates that the user plane network element receives, from the first terminal, the execution result of performing the operation indicated by any one of the indication information.

2. The method according to claim 1, wherein the second information comprises an identifier of the first terminal.

3. The method according to claim 2, wherein the second information corresponding to the indication information further comprises information about the operation indicated by the indication information; and
before the sending (607) third information to the access network device, the method further comprises:
determining that an operation corresponding to the information about the operation comprised in the at least one piece of second information is the same as a target operation corresponding to the first terminal.

4. The method according to claim 2, wherein the at least one piece of indication information comprises first indication information and second indication information;
the sending (604) at least one piece of indication information to a first terminal found through querying (603) by the access network device comprises:
sending the first indication information to the first terminal; and
when receiving second information corresponding to the first indication information, and determining, based on a mapping relationship between the identifier of the first terminal and a performed operation, that the first terminal has not completed the target operation, sending the second indication information to the first terminal; and
before the sending (607) third information to the access network device, the method further comprises:
when receiving second information corresponding to the second indication information, and determining, based on the mapping relationship between the identifier of the first terminal and the performed operation, that the first terminal has completed the target operation, sending the third information to the access network device.

5. The method according to any one of claims 1 to 4, wherein the method further comprises:
sending a policy rule to the user plane network element, wherein the second information is sent by the user plane network element according to the policy rule, and the policy rule indicates the user plane network element to send the second information after receiving an execution result of performing any operation in the target operation by any terminal in the target terminal.

6. The method according to claim 5, wherein before the sending a policy rule to the user plane network element, the method further comprises:
receiving a second request from a session management network element, wherein the second request is for requesting to establish an association between the session management network element and the terminal management function network element for the first request; and
establishing the association between the terminal management function network element and the session management network element for the first request; and
the sending a policy rule to the user plane network element comprises:
indicating the policy rule to the user plane network element via the session management network element based on the association.

7. A communication method, wherein the method is applied to a user plane network element, and comprises:
receiving (605) an execution result, wherein the execution result is a result of performing at least one operation by a first terminal, the execution result comprises an identifier of the first terminal, and the at least one operation is indicated by a terminal management function network element to the first terminal; and
sending (606) second information to the terminal management function network element, wherein the second information indicates that the user plane network element receives (605), from the first terminal, the execution result of performing the at least one operation.

8. The method according to claim 7, wherein the execution result further comprises one or more of the following:
information about the at least one operation, or data generated by performing the at least one operation by the first terminal.

9. The method according to claim 7 or 8, wherein the receiving (605) an execution result comprises:
receiving (605) the execution result based on a user plane tunnel between an access network device and the user plane network element, wherein terminals within coverage of the access network device correspond to a same user plane tunnel; or
receiving (605) the execution result based on a user plane tunnel that is between an access network device and the user plane network element and that is established for the first terminal, wherein
different terminals within coverage of the access network device correspond to different user plane tunnels.

10. The method according to any one of claims 7 to 9, wherein the second information comprises the identifier of the first terminal.

11. The method according to claim 10, wherein the second information further comprises the information about the at least one operation.

12. The method according to any one of claims 7 to 9, wherein the sending (606) second information to the terminal management function network element comprises:
sending (606) the second information to the terminal management function network element according to a policy rule, wherein the policy rule indicates the user plane network element to send the second information after receiving an execution result of performing an operation by a terminal.

13. A communication apparatus, comprising a module that implements the method according to any one of claims 1 to 6 or a module that implements the method according to any one of claims 7 to 12.

14. A chip system, wherein the chip system comprises a processing circuit, and the processing circuit is coupled to a storage medium; and
the processing circuit is configured to: execute some or all of computer programs or instructions in the storage medium; and when the some or all of the computer programs or instructions are executed, implement the method according to any one of claims 1 to 6, or implement the method according to any one of claims 7 to 12.

15. A computer-readable storage medium, configured to store a computer program, wherein the computer program comprises instructions for implementing the method according to any one of claims 1 to 6 or instructions for implementing the method according to any one of claims 7 to 12.

## Patentansprüche

1. Kommunikationsverfahren, wobei das Verfahren auf ein Netzelement mit Endgeräteverwaltungsfunktion angewendet wird und das Verfahren Folgendes umfasst:
Empfangen (601) einer ersten Anforderung zum Durchführen eines Zielvorgangs auf einem Zielendgerät, wobei das Zielendgerät eine Vielzahl von Endgeräten umfasst und der Zielvorgang einen oder mehrere Vorgänge umfasst;
Senden (602) erster Informationen an eine Zugangsnetzeinrichtung, wobei die ersten Informationen angeben, das Zielendgerät abzufragen;
Senden (604) mindestens eines Elements von Angabeinformationen an ein erstes Endgerät, das durch Abfragen (603) durch die Zugangsnetzeinrichtung gefunden wird, wobei die Angabeinformationen mindestens einen Vorgang in dem Zielvorgang angeben, das erste Endgerät zu dem Zielendgerät gehört und ein Ausführungsergebnis von Durchführen, durch das erste Endgerät, eines Vorgangs, der durch eine beliebige der Angabeinformationen angegeben wird, durch das erste Endgerät an ein Benutzerebenen-Netzelement gesendet wird; und,
wenn bestimmt wird, dass mindestens ein Element von zweiten Informationen von dem Benutzerebenen-Netzelement empfangen wird (606), Senden (607) dritter Informationen an die Zugangsnetzeinrichtung, wobei die dritten Informationen angeben, ein weiteres Endgerät abzufragen, das durch Abfragen in dem Zielendgerät nicht gefunden wird, und die zweiten Informationen angeben, dass das Benutzerebenen-Netzelement von dem ersten Endgerät das Ausführungsergebnis von Durchführen des Vorgangs, der durch eine beliebige der Angabeinformationen angegeben wird, empfängt.

2. Verfahren nach Anspruch 1, wobei die zweiten Informationen eine Kennung des ersten Endgeräts umfassen.

3. Verfahren nach Anspruch 2, wobei die zweiten Informationen, die den Angabeinformationen entsprechen, ferner Informationen über den Vorgang umfassen, der durch die Angabeinformationen angegeben wird; und
das Verfahren vor dem Senden (607) dritter Informationen an die Zugangsnetzeinrichtung ferner Folgendes umfasst:
Bestimmen, dass ein Vorgang, der den Informationen über den Vorgang, die in dem mindestens einen Element von zweiten Informationen umfasst sind, entspricht, der gleiche ist, wie ein Zielvorgang, der dem ersten Endgerät entspricht.

4. Verfahren nach Anspruch 2, wobei das mindestens eine Element von Angabeinformationen erste Angabeinformationen und zweite Angabeinformationen umfasst;
das Senden (604) mindestens eines Elements von Angabeinformationen an ein erstes Endgerät, das durch Abfragen (603) durch die Zugangsnetzeinrichtung gefunden wird, Folgendes umfasst:
Senden der ersten Angabeinformationen an das erste Endgerät; und,
wenn zweite Informationen empfangen werden, die den ersten Angabeinformationen entsprechen, und bestimmt wird, basierend auf einer Zuordnungsbeziehung zwischen der Kennung des ersten Endgeräts und einem durchgeführten Vorgang, dass das erste Endgerät den Zielvorgang nicht abgeschlossen hat, Senden der zweiten Angabeinformationen an das erste Endgerät; und
das Verfahren vor dem Senden (607) dritter Informationen an die Zugangsnetzeinrichtung ferner Folgendes umfasst:
wenn zweite Informationen empfangen werden, die den zweiten Angabeinformationen entsprechen, und bestimmt wird, basierend auf der Zuordnungsbeziehung zwischen der Kennung des ersten Endgeräts und dem durchgeführten Vorgang, dass das erste Endgerät den Zielvorgang abgeschlossen hat, Senden der dritten Informationen an die Zugangsnetzeinrichtung.

5. Verfahren nach einem der Ansprüche 1 bis 4, wobei das Verfahren ferner Folgendes umfasst:
Senden einer Richtlinienregel an das Benutzerebenen-Netzelement, wobei die zweiten Informationen durch das Benutzerebenen-Netzelement gemäß der Richtlinienregel gesendet werden und die Richtlinienregel dem Benutzerebenen-Netzelement angibt, die zweiten Informationen zu senden, nachdem es ein Ausführungsergebnis von Durchführen eines beliebigen Vorgangs in dem Zielvorgang durch ein beliebiges Endgerät in dem Zielendgerät empfangen hat.

6. Verfahren nach Anspruch 5, wobei das Verfahren vor dem Senden einer Richtlinienregel an das Benutzerebenen-Netzelement ferner Folgendes umfasst:
Empfangen einer zweiten Anforderung von einem Sitzungsverwaltungsnetzelement, wobei die zweite Anforderung dazu dient, Herstellen einer Verknüpfung zwischen dem Sitzungsverwaltungsnetzelement und dem Netzelement mit Endgeräteverwaltungsfunktion für die erste Anforderung anzufordern; und
Herstellen der Verknüpfung zwischen dem Netzelement mit Endgeräteverwaltungsfunktion und dem Sitzungsverwaltungsnetzelement für die erste Anforderung; und
das Senden einer Richtlinienregel an das Benutzerebenen-Netzelement Folgendes umfasst:
Angeben der Richtlinienregel an das Benutzerebenen-Netzelement über das Sitzungsverwaltungsnetzelement basierend auf der Zuordnung.

7. Kommunikationsverfahren, wobei das Verfahren auf ein Benutzerebenen-Netzelement angewendet wird, und Folgendes umfasst:
Empfangen (605) eines Ausführungsergebnisses, wobei das Ausführungsergebnis ein Ergebnis von Durchführen mindestens eines Vorgangs durch ein erstes Endgerät ist, das Ausführungsergebnis eine Kennung des ersten Endgeräts umfasst und der mindestens eine Vorgang durch ein Netzelement mit Endgeräteverwaltungsfunktion dem ersten Endgerät angegeben wird; und
Senden (606) zweiter Informationen an das Netzelement mit Endgeräteverwaltungsfunktion, wobei die zweiten Informationen angeben, dass das Benutzerebenen-Netzelement von dem ersten Endgerät das Ausführungsergebnis von Durchführen des mindestens einen Vorgangs empfängt (605).

8. Verfahren nach Anspruch 7, wobei das Ausführungsergebnis ferner eines oder mehrere der Folgenden umfasst:
Informationen über den mindestens einen Vorgang oder Daten, die durch Durchführen des mindestens einen Vorgangs durch das erste Endgerät erzeugt werden.

9. Verfahren nach Anspruch 7 oder 8, wobei das Empfangen (605) eines Ausführungsergebnisses Folgendes umfasst:
Empfangen (605) des Ausführungsergebnisses basierend auf einem Benutzerebenentunnel zwischen einer Zugangsnetzeinrichtung und dem Benutzerebenen-Netzelement, wobei Endgeräte innerhalb einer Reichweite der Zugangsnetzeinrichtung einem gleichen Benutzerebenentunnel entsprechen; oder
Empfangen (605) des Ausführungsergebnisses basierend auf einem Benutzerebenentunnel, der zwischen einer Zugangsnetzeinrichtung und dem Benutzerebenen-Netzelement besteht und der für das erste Endgerät eingerichtet wird, wobei
unterschiedliche Endgeräte innerhalb der Reichweite der Zugangsnetzeinrichtung unterschiedlichen Benutzerebenentunneln entsprechen.

10. Verfahren nach einem der Ansprüche 7 bis 9, wobei die zweiten Informationen die Kennung des ersten Endgeräts umfassen.

11. Verfahren nach Anspruch 10, wobei die zweiten Informationen ferner die Informationen über den mindestens einen Vorgang umfassen.

12. Verfahren nach einem der Ansprüche 7 bis 9, wobei das Senden (606) zweiter Informationen an das Netzelement mit Endgeräteverwaltungsfunktion Folgendes umfasst:
Senden (606) der zweiten Informationen an das Netzelement mit Endgeräteverwaltungsfunktion gemäß einer Richtlinienregel, wobei die Richtlinienregel dem Benutzerebenen-Netzelement angibt, die zweiten Informationen zu senden, nachdem es ein Ausführungsergebnis von Durchführen eines Vorgangs durch ein Endgerät empfangen hat.

13. Kommunikationsvorrichtung, umfassend ein Modul, das das Verfahren nach einem der Ansprüche 1 bis 6 implementiert, oder ein Modul, das das Verfahren nach einem der Ansprüche 7 bis 12 implementiert.

14. Chipsystem, wobei das Chipsystem eine Verarbeitungsschaltung umfasst und die Verarbeitungsschaltung mit einem Speichermedium verbunden ist; und
die Verarbeitungsschaltung zu Folgendem konfiguriert ist: Ausführen einiger oder aller Computerprogramme oder Anweisungen auf dem Speichermedium; und, wenn die einigen oder alle Computerprogramme oder Anweisungen ausgeführt werden, Implementieren des Verfahrens nach einem der Ansprüche 1 bis 6 oder Implementieren des Verfahrens nach einem der Ansprüche 7 bis 12.

15. Computerlesbares Speichermedium, das dazu konfiguriert ist, ein Computerprogramm zu speichern, wobei das Computerprogramm Anweisungen zum Implementieren des Verfahrens nach einem der Ansprüche 1 bis 6 oder Anweisungen zum Implementieren des Verfahrens nach einem der Ansprüche 7 bis 12 umfasst.

## Revendications

1. Procédé de communication, dans lequel le procédé est appliqué à un élément de réseau de fonction de gestion de terminal, et le procédé comprend :
la réception (601) d'une première demande pour réaliser une opération cible sur un terminal cible, dans lequel le terminal cible comprend une pluralité de terminaux et l'opération cible comprend une ou plusieurs opérations ;
l'envoi (602) de premières informations à un dispositif de réseau d'accès, dans lequel les premières informations indiquent d'interroger le terminal cible ;
l'envoi (604) d'au moins une information d'indication à un premier terminal trouvé par une interrogation (603) effectuée par le dispositif de réseau d'accès, dans lequel les informations d'indication signalent au moins une opération dans l'opération cible, le premier terminal appartient au terminal cible, et le résultat d'exécution de la réalisation, par le premier terminal, d'une opération indiquée par l'une quelconque des informations d'indication est envoyé par le premier terminal à un élément de réseau du plan utilisateur ; et
lorsqu'il est déterminé qu'au moins une deuxième information provenant de l'élément de réseau du plan utilisateur est reçue (606), l'envoi (607) de troisièmes informations au dispositif de réseau d'accès, dans lequel les troisièmes informations indiquent d'interroger un autre terminal qui n'est pas trouvé en interrogeant le terminal cible, et les deuxièmes informations indiquent que l'élément de réseau du plan utilisateur reçoit, du premier terminal, le résultat d'exécution de la réalisation de l'opération indiquée par l'une quelconque des informations d'indication.

2. Procédé selon la revendication 1, dans lequel les deuxièmes informations comprennent un identifiant du premier terminal.

3. Procédé selon la revendication 2, dans lequel les deuxièmes informations correspondant aux informations d'indication comprennent en outre des informations sur l'opération indiquée par les informations d'indication ; et
avant l'envoi (607) de troisièmes informations au dispositif de réseau d'accès, le procédé comprend en outre :
le fait de déterminer qu'une opération correspondant aux informations sur l'opération comprises dans l'au moins une deuxième information est la même qu'une opération cible correspondant au premier terminal.

4. Procédé selon la revendication 2, dans lequel l'au moins une information d'indication comprend de premières informations d'indication et de deuxièmes informations d'indication ;
l'envoi (604) d'au moins une information d'indication à un premier terminal trouvé par une interrogation (603) effectuée par le dispositif de réseau d'accès comprend :
l'envoi des premières informations d'indication au premier terminal ; et
lors de la réception de deuxièmes informations correspondant aux premières informations d'indication, et après avoir déterminé, sur la base d'une correspondance entre l'identifiant du premier terminal et une opération réalisée, que le premier terminal n'a pas terminé l'opération cible, l'envoi des deuxièmes informations d'indication au premier terminal ; et
avant l'envoi (607) de troisièmes informations au dispositif de réseau d'accès, le procédé comprend en outre :
lors de la réception de deuxièmes informations correspondant aux deuxièmes informations d'indication, et après avoir déterminé, sur la base de la correspondance entre l'identifiant du premier terminal et l'opération réalisée, que le premier terminal a terminé l'opération cible, l'envoi des premières informations au dispositif de réseau d'accès.

5. Procédé selon l'une quelconque des revendications 1 à 4, dans lequel le procédé comprend en outre :
l'envoi d'une règle de politique à l'élément de réseau du plan utilisateur, dans lequel les deuxièmes informations sont envoyées par l'élément de réseau du plan utilisateur selon la règle de politique, et la règle de politique indique à l'élément de réseau du plan utilisateur d'envoyer les deuxièmes informations après avoir reçu un résultat d'exécution de réalisation d'une quelconque opération dans l'opération cible par un quelconque terminal du terminal cible.

6. Procédé selon la revendication 5, dans lequel, avant l'envoi d'une règle de politique à l'élément de réseau du plan utilisateur, le procédé comprend en outre :
la réception d'une seconde demande d'un élément de réseau de gestion de session, dans lequel la seconde demande sert à demander d'établir une association entre l'élément de réseau de gestion de session et l'élément de réseau de fonction de gestion de terminal de la première demande ; et
l'établissement de l'association entre l'élément de réseau de fonction de gestion de terminal et l'élément de réseau de gestion de session pour la première demande ; et
l'envoi d'une règle de politique à l'élément de réseau du plan utilisateur comprend :
l'indication de la règle de politique à l'élément de réseau du plan utilisateur par l'intermédiaire de l'élément de réseau de gestion de session sur la base de l'association.

7. Procédé de communication, dans lequel le procédé est appliqué à un élément de réseau du plan utilisateur, et comprend :
la réception (605) d'un résultat d'exécution, dans lequel le résultat d'exécution est le résultat de la réalisation d'au moins une opération par un premier terminal, le résultat d'exécution comprend un identifiant du premier terminal, et l'au moins une opération est indiquée au premier terminal par un élément de réseau de fonction de gestion de terminal ; et
l'envoi (606) de deuxièmes informations à l'élément de réseau de fonction de gestion de terminal, dans lequel les deuxièmes informations indiquent que l'élément de réseau du plan utilisateur reçoit (605), du premier terminal, le résultat d'exécution de la réalisation de l'au moins une opération.

8. Procédé selon la revendication 7, dans lequel le résultat d'exécution comprend en outre l'un ou plusieurs des éléments suivants :
des informations sur l'au moins une opération, ou des données générées par la réalisation de l'au moins une opération par le premier terminal.

9. Procédé selon la revendication 7 ou 8, dans lequel la réception (605) d'un résultat d'exécution comprend :
la réception (605) du résultat d'exécution sur la base d'un tunnel du plan utilisateur entre un dispositif de réseau d'accès et l'élément de réseau du plan utilisateur, dans lequel les terminaux situés dans la zone de couverture du dispositif de réseau d'accès correspondent à un même tunnel du plan utilisateur ; ou
la réception (605) du résultat d'exécution sur la base d'un tunnel du plan utilisateur qui se trouve entre un dispositif de réseau d'accès et l'élément de réseau du plan utilisateur et qui est établi pour le premier terminal, dans lequel
les différents terminaux situés dans la zone de couverture du dispositif de réseau d'accès correspondent à différents tunnels du plan utilisateur.

10. Procédé selon l'une quelconque des revendications 7 à 9, dans lequel les deuxièmes informations comprennent l'identifiant du premier terminal.

11. Procédé selon la revendication 10, dans lequel les deuxièmes informations comprennent en outre les informations sur l'au moins une opération.

12. Procédé selon l'une quelconque des revendications 7 à 9, dans lequel l'envoi (606) des deuxièmes informations à l'élément de réseau de fonction de gestion de terminal comprend :
l'envoi (606) des deuxièmes informations à l'élément de réseau de fonction de gestion de terminal selon une règle de politique, dans lequel la règle de politique indique à l'élément de réseau du plan utilisateur d'envoyer les deuxièmes informations après avoir reçu un résultat d'exécution de réalisation d'une opération par un terminal.

13. Appareil de communication, comprenant un module qui met en œuvre le procédé selon l'une quelconque des revendications 1 à 6 ou un module qui met en œuvre le procédé selon l'une quelconque des revendications 7 à 12.

14. Système de puce, dans lequel le système de puce comprend un circuit de traitement, et le circuit de traitement est couplé à un support de stockage ; et
le circuit de traitement est configuré pour : exécuter tout ou partie des programmes ou instructions informatiques dans le support de stockage ; et lorsque tout ou partie des programmes ou instructions informatiques sont exécutés, mettre en œuvre le procédé selon l'une quelconque des revendications 1 à 6, ou mettre en œuvre le procédé selon l'une quelconque des revendications 7 à 12.

15. Support de stockage lisible par ordinateur, configuré pour stocker un programme informatique, dans lequel le programme informatique comprend des instructions pour la mise en œuvre du procédé selon l'une quelconque des revendications 1 à 6 ou des instructions pour la mise en œuvre du procédé selon l'une quelconque des revendications 7 à 12.
